# EUROPEAN PATENT APPLICATION

(11) **EP 4 317 207 A1**
(43) Date of publication of application: **07.02.2024**
(21) Application number: 22775846.3
(22) Date of filing: 25.03.2022
(51) Int. Cl.: C08F 8/42, C08F 290/06, C08G 65/328, C08L 33/02, C08L 71/02

(54) **CURABLE COMPOSITION AND CURED PRODUCT THEREOF**

(30) Priority: 26.03.2021 JP 2021052541
(71) Applicant: Kaneka Corporation, Osaka-shi, Osaka 530-8288 (JP)
(72) Inventor: MIYAFUJI, Kiyoshi, Takasago-shi, Hyogo 676-8688 (JP)
(74) Representative: Vossius & Partner Patentanwälte Rechtsanwälte mbB
(86) International application number: PCT/JP2022/014605
(87) International publication number: WO 2022/203065

(57) **Abstract**

A curable composition contains: a (meth)acrylic ester copolymer (A) having a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1; and a polyoxyalkylene polymer (B) having a reactive silicon group represented by the formula (1). A monomer component of the copolymer (A) includes: a (meth)acrylic ester (a1); a polyoxyalkylene polymer (a2) having more than one (meth)acryloyl groups per molecule; and a chain transfer agent (a3) having a mercapto group. The monomer component further includes a monomer (a4) having a reactive silicon group and a polymerizable unsaturated group, and/or the chain transfer agent (a3) further has a reactive silicon group.

## Description

### Technical Field

The present invention relates to a curable composition containing a polymer having a reactive silicon group and a cured product of the composition.

### Background Art

An organic polymer that has a silicon group having a hydroxy or hydrolyzable group on a silicon atom and capable of forming a siloxane bond through a hydrolysis-condensation reaction (this silicon group may be referred to as a "reactive silicon group" hereinafter) undergoes a reaction under the effect of moisture or the like even at room temperature. Crosslinking of such an organic polymer through a siloxane condensation reaction of the reactive silicon group is known to give a rubbery cured product.

Among this kind of organic polymers, a polyoxyalkylene polymer having a reactive silicon group has a relatively low viscosity and thus exhibits high workability when a composition containing the polyoxyalkylene polymer is prepared or used. Such a polyoxyalkylene polymer is widely used in various products such as a sealing material, an adhesive, and a paint because the resulting cured product has a good balance among performance characteristics such as mechanical properties, weathering resistance, and dynamic durability (see Patent Literature 1).

A curable composition is known in which a reactive silicon group-containing polyoxyalkylene polymer and a reactive silicon group-containing (meth)acrylic ester polymer are used in combination to improve the weathering resistance and adhesion of the reactive silicon group-containing polyoxyalkylene polymer (see Patent Literature 2). The curable composition is used as a weather-resistant sealant or an industrial adhesive.

Patent Literature 3 describes a curable resin that cures at a high speed and has excellent adhesion, with an aim to overcome the disadvantage of low curing speed of a one-part moisture-curable adhesive made with modified silicone or acrylic-modified silicone. The curable resin is a reactive silicon group-containing graft copolymer synthesized by radical polymerization of an oligomer having a polyether backbone and having double bonds at both ends of the backbone, a vinyl monomer such as a (meth)acrylic ester, and a chain transfer agent.

### Citation List

### Patent Literature

PTL 1: Japanese Laid-Open Patent Application Publication No. S52-73998
PTL 2: Japanese Laid-Open Patent Application Publication No. S59-122541
PTL 3: Japanese Patent No. 5082851

### Summary of Invention

### Technical Problem

A polymer having a reactive silicon group is required to have a low viscosity so that the polymer is easy to handle before curing.

In the case of the curable composition described in Patent Literature 2, although the weathering resistance and adhesion of the reactive silicon group-containing polyoxyalkylene polymer are improved, the viscosity of the composition tends to be relatively high, and a cured product of the composition tends to exhibit low elongation at break. Additionally, the curability in the thickness direction (referred to as "depth curability") also tends to be low. As such, the curable composition described in Patent Literature 2 leaves room for improvement.

In view of the above circumstances, the present invention aims to provide a curable composition containing a reactive silicon group-containing polyoxyalkylene polymer and a reactive silicon group-containing (meth)acrylic ester polymer, the curable composition having a low viscosity and high depth curability and being formable into a cured product excellent in elongation at break.

### Solution to Problem

As a result of intensive studies with the goal of solving the above problem, the present inventors have found that a curable composition containing a reactive silicon group-containing polyoxyalkylene polymer and a reactive silicon group-containing (meth)acrylic ester polymer can be a solution to the problem when particular monomers and a particular chain transfer agent are used in the reactive silicon group-containing (meth)acrylic ester polymer, and have completed the present invention based on this finding.

Specifically, the present invention relates to a curable composition containing: a (meth)acrylic ester copolymer (A) having a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1; and a polyoxyalkylene polymer (B) having a reactive silicon group represented by the formula (1), wherein a monomer component of the (meth)acrylic ester copolymer (A) includes: a (meth)acrylic ester (a1); a polyoxyalkylene polymer (a2) having more than one (meth)acryloyl groups per molecule; and a chain transfer agent (a3) having a mercapto group, and the monomer component further includes a monomer (a4) having a reactive silicon group and a polymerizable unsaturated group, and/or the chain transfer agent (a3) having a mercapto group further has a reactive silicon group.

Preferably, the polyoxyalkylene polymer (a2) constitutes 0.08 to 6.0 mol% of the monomer component.

Preferably, the chain transfer agent (a3) having a mercapto group constitutes 0.4 to 15 mol% of the monomer component.

Preferably, the chain transfer agent (a3) having a mercapto group constitutes 2 to 9 wt% of the monomer component.

Preferably, the (meth)acrylic ester (a1) includes an alkyl (meth)acrylate (a1') whose alkyl has 7 to 30 carbon atoms, and the alkyl (meth)acrylate (a1') constitutes 2 to 9 wt% of the monomer component.

Preferably, a molar ratio of the polyoxyalkylene polymer (a2) to the chain transfer agent (a3) having a mercapto group is 0.04 or more.

Preferably, the polyoxyalkylene polymer (a2) has a number-average molecular weight of 20,000 or more.

Preferably, the (meth)acrylic ester copolymer (A) has a weight-average molecular weight of 20,000 or less.

Preferably, the (meth)acrylic ester copolymer (A) has a dispersity of 3.0 to 11.0.

Preferably, the (meth)acrylic ester copolymer (A) has a sulfur atom concentration of 700 to 20,000 ppm.

Preferably, a weight ratio of the (meth)acrylic ester copolymer (A) to the polyoxyalkylene polymer (B) is from 5:95 to 50:50.

Preferably, the polyoxyalkylene polymer (B) is linear.

Preferably, the polyoxyalkylene polymer (B) has a number-average molecular weight of 20,000 or more.

The present invention also relates to a cured product of the curable composition.

### Advantageous Effects of Invention

The present invention can provide a curable composition containing a reactive silicon group-containing polyoxyalkylene polymer and a reactive silicon group-containing (meth)acrylic ester polymer, the curable composition having a low viscosity and high depth curability and being formable into a cured product excellent in elongation at break.

### Description of Embodiments

Hereinafter, embodiments of the present invention will be described in detail. The present invention is not limited to the embodiments described below.

A curable composition according to the present embodiment contains a (meth)acrylic ester copolymer (A) having a reactive silicon group and a polyoxyalkylene polymer (B) having a reactive silicon group.

### <<(Meth)acrylic Ester Copolymer (A)>>

The (meth)acrylic ester copolymer (A) has a reactive silicon group represented by the following formula (1) at a molecular chain end and/or in a side chain (non-terminal moiety).

-SiR¹_{c}X_{3-c} (1)

In the formula, R¹ is a substituted or unsubstituted hydrocarbon group having 1 to 20 carbon atoms, X is a hydroxy group or a hydrolyzable group, and c is 0 or 1.

The number of carbon atoms in the hydrocarbon group represented by R¹ is preferably from 1 to 10, more preferably from 1 to 5, and even more preferably from 1 to 3. Specific examples of R¹ include methyl, ethyl, chloromethyl, methoxymethyl, and N,N-diethylaminomethyl groups. R¹ is preferably a methyl group or an ethyl group.

Examples of X include a hydroxy group, hydrogen, halogens, and alkoxy, acyloxy, ketoximate, amino, amide, acid amide, aminooxy, mercapto, and alkenyloxy groups. Among these, alkoxy groups such as methoxy and ethoxy groups are more preferred in terms of moderate hydrolyzability and ease of handling. Methoxy and ethoxy groups are particularly preferred.

The integer c is 0 or 1. To obtain a cured product having a high Young's modulus, c is preferably 0.

Specific examples of the reactive silicon group of the (meth)acrylic ester copolymer (A) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (*N,N*-diethylaminomethyl)dimethoxysilyl, and (*N,N*-diethylaminomethyl)diethoxysilyl groups. Among these, methyldimethoxysilyl, trimethoxysilyl, triethoxysilyl, (chloromethyl)dimethoxysilyl, (methoxymethyl)dimethoxysilyl, (methoxymethyl)diethoxysilyl, and (*N,N*-diethylaminomethyl)dimethoxysilyl groups are preferred since they exhibit high activity. A methyldimethoxysilyl group is preferred to obtain a cured product having high elongation. To obtain a cured product having high strength, trimethoxysilyl and triethoxysilyl groups are more preferred, and a trimethoxysilyl group is even more preferred.

The reactive silicon group amount in the (meth)acrylic ester copolymer (A) is not limited to a particular range, but is preferably 0.2 mmol/g or more, more preferably 0.4 mmol/g or more, and even more preferably 0.5 mmol/g or more. The reactive silicon group amount is preferably 2.0 mmol/g or less. To prevent reduced elongation of the resulting cured product, the reactive silicon group amount is more preferably 1.0 mmol/g or less.

The (meth)acrylic ester copolymer (A) is a polymer formed by copolymerization of a monomer component including at least a (meth)acrylic ester (a1), a polyoxyalkylene polymer (a2) having more than one (meth)acryloyl groups per molecule, and a chain transfer agent (a3) having a mercapto group. The term "(meth)acryl" as used herein means "acryl and/or methacryl".

The (meth)acrylic ester copolymer (A) has a reactive silicon group when either or both of the following two requirements are met.

Requirement 1: The monomer component further includes a monomer (a4) having a reactive silicon group and a polymerizable unsaturated group.

Requirement 2: The chain transfer agent (a3) having a mercapto group further has a reactive silicon group.

To obtain a cured product having high elongation, the amount of reactive silicon groups introduced as a result of Requirement 2 being met is preferably greater than the amount of reactive silicon groups introduced as a result of Requirement 1 being met. Specifically, the amount of reactive silicon groups introduced as a result of Requirement 1 being met is preferably 0.01 mmol/g or more, more preferably 0.03 mmol/g or more, and even more preferably 0.05 mmol/g or more. The amount of the reactive silicon groups introduced as a result of Requirement 1 being met is preferably 1.0 mmol/g or less and more preferably 0.5 mmol/g or less. The amount of reactive silicon groups introduced as a result of Requirement 2 being met is preferably 0.2 mmol/g or more, more preferably 0.3 mmol/g or more, and even more preferably 0.5 mmol/g or more. The amount of the reactive silicon groups introduced as a result of Requirement 2 being met is preferably 1.5 mmol/g or less and more preferably 1.0 mmol/g or less.

To obtain a cured product having high strength, it is preferable to introduce reactive silicon groups by meeting both of Requirements 1 and 2. Specifically, the amount of reactive silicon groups introduced as a result of Requirement 1 being met is preferably 0.1 mmol/g or more, more preferably 0.2 mmol/g or more, and even more preferably 0.3 mmol/g or more. The amount of the reactive silicon groups introduced as a result of Requirement 1 being met is preferably 1.8 mmol/g or less and more preferably 1.0 mmol/g or less. The amount of reactive silicon groups introduced as a result of Requirement 2 being met is preferably 0.1 mmol/g or more, more preferably 0.2 mmol/g or more, and even more preferably 0.3 mmol/g or more. The amount of the reactive silicon groups introduced as a result of Requirement 2 being met is preferably 1.5 mmol/g or less and more preferably 1.0 mmol/g or less.

### <(Meth)acrylic Ester (al)>

Examples of the (meth)acrylic ester (a1) include, but are not limited to, methyl (meth)acrylate, ethyl (meth)acrylate, *n*-propyl (meth)acrylate, isopropyl (meth)acrylate, *n*-butyl (meth)acrylate, isobutyl (meth)acrylate, *tert*-butyl (meth)acrylate, *n*-pentyl (meth)acrylate, *n*-hexyl (meth)acrylate, cyclohexyl (meth)acrylate, *n*-heptyl (meth)acrylate, *n*-octyl (meth)acrylate, 2-ethylhexyl (meth)acrylate, nonyl (meth)acrylate, decyl (meth)acrylate, dodecyl (meth)acrylate, stearyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, an ethylene oxide adduct of (meth)acrylic acid, 2,2,2-trifluoroethyl (meth)acrylate, 3,3,3-trifluoropropyl (meth)acrylate, 3,3,4,4,4-pentafluorobutyl (meth)acrylate, 2-perfluoroethyl-2-perfluorobutylethyl (meth)acrylate, trifluoromethyl (meth)acrylate, perfluoroethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate, dimethylaminoethyl (meth)acrylate, chloroethyl (meth)acrylate, tetrahydrofurfuryl (meth)acrylate, glycidyl (meth)acrylate, and 2-aminoethyl (meth)acrylate. One of these (meth)acrylic esters may be used alone, or two or more thereof may be used in combination.

The (meth)acrylic ester (a1) is preferably an alkyl (meth)acrylate.

In terms of obtaining a cured product having high strength, the content of the (meth)acrylic ester (a1) is preferably 30 wt% or more, more preferably 40 wt% or more, even more preferably 45 wt% or more, still even more preferably 50 wt% or more, and yet even more preferably 60 wt% or more relative to the total monomer component of the (meth)acrylic ester copolymer (A). In terms of retention of adhesion, the content of the (meth)acrylic ester (a1) is preferably 50 wt% or more, more preferably 55 wt% or more, and even more preferably 60 wt% or more relative to the total monomer component of the (meth)acrylic ester copolymer (A).

To obtain a cured product having high strength, the (meth)acrylic ester (a 1) preferably includes an alkyl (meth)acrylate whose alkyl has 1 to 4 carbon atoms. The alkyl (meth)acrylate whose alkyl has 1 to 4 carbon atoms is preferably contained in an amount of 35 wt% or more, more preferably 40 wt% or more, even more preferably 45 wt% or more, relative to the total monomer component of the (meth)acrylic ester copolymer (A).

To form a rigid polymer chain and obtain a cured product having high strength, the (meth)acrylic ester (a1) preferably includes at least one monomer selected from the group consisting of a methacrylic ester, isobornyl acrylate, dicyclopentenyl acrylate, and dicyclopentanyl acrylate. In particular, the at least one monomer selected as the (meth)acrylic ester (a1) from the group consisting of a methacrylic ester, isobornyl acrylate, dicyclopentenyl acrylate, and dicyclopentanyl acrylate preferably constitutes 60 wt% or more, more preferably 70 wt% or more, of the total monomer component excluding the polyoxyalkylene polymer (a2).

To improve the miscibility with the polyoxyalkylene polymer (B), the (meth)acrylic ester (a1) preferably includes an alkyl (meth)acrylate (a1') whose alkyl has 7 to 30 carbon atoms. The content of the alkyl (meth)acrylate (a1') whose alkyl has 7 to 30 carbon atoms is preferably from 0.5 to 15 wt%, more preferably from 0.7 to 13 wt%, even more preferably from 1 to 11 wt%, still even more preferably from 1.5 to 10 wt%, and particularly preferably from 2 to 9 wt% relative to the total monomer component of the (meth)acrylic ester copolymer (A). When the content is 9 wt% or less, the resulting cured product can exhibit high tensile strength at break.

### <Polyoxyalkylene Polymer (a2) Having More Than One (Meth)acryloyl Groups per Molecule>

Although being a polymer in itself, the polyoxyalkylene polymer (a2) serves as one of the monomers of the (meth)acrylic ester copolymer (A). By virtue of having (meth)acryloyl groups, the polyoxyalkylene polymer (a2) is copolymerizable with another monomer such as the (meth)acrylic ester (a1). Additionally, the polyoxyalkylene polymer (a2) can function as a so-called polyfunctional macromonomer since it has more than one (meth)acryloyl groups per molecule. In the (meth)acrylic ester copolymer (A), the backbone (second molecular chain described later) of the polyoxyalkylene polymer (a2) can form a structure crosslinking two molecular chains (first molecular chains described later) each of which is composed of a polymer of the (meth)acrylic ester (a1) etc. The polyoxyalkylene polymer (a2) may be referred to as a "polyfunctional macromonomer (a2)" hereinafter.

The backbone of the polyfunctional macromonomer (a2) is a polyoxyalkylene polymer. Examples of the backbone of the polyfunctional macromonomer (a2) include, but are not limited to, polyoxyethylene, polyoxypropylene, polyoxybutylene, polyoxytetramethylene, polyoxyethylene-polyoxypropylene copolymer, and polyoxypropylene-polyoxybutylene copolymer. Among these, polyoxypropylene is preferred.

The backbone of the polyoxyalkylene polymer may be linear or branched and is preferably linear.

The (meth)acryloyl groups of the polyfunctional macromonomer (a2) are preferably represented by the following formula (2).

CH₂=C(R²)-COO-Z (2)

In the formula, R² is hydrogen or a methyl group, and Z is the backbone of the polyfunctional macromonomer (a2).

The polyfunctional macromonomer (a2) has more than one (meth)acryloyl groups on average per molecule. The number of (meth)acryloyl groups is preferably from 1.1 to 5, more preferably from 1.3 to 4, even more preferably from 1.6 to 2.5, and particularly preferably from 1.8 to 2.0 on average per molecule of the polyfunctional macromonomer (a2). The polyfunctional macromonomer (a2) may have only acryloyl groups, only methacryloyl groups, or both acryloyl and methacryloyl groups as the (meth)acryloyl groups.

The polyfunctional macromonomer (a2) may have a (meth)acryloyl group at a molecular chain end of a polyoxyalkylene polymer, in a side chain of the polyoxyalkylene polymer, or both at the molecular chain end and in the side chain. In terms of achieving good mechanical properties, the polyfunctional macromonomer (a2) preferably has a (meth)acryloyl group at the molecular chain end. The polyfunctional macromonomer (a2) particularly preferably has a linear backbone and has (meth)acryloyl groups at both ends of the molecular chain of the linear backbone.

The method for synthesizing the polyfunctional macromonomer (a2) is not limited to a particular technique. An exemplary method is to prepare a polyoxyalkylene polymer having more than one hydroxy groups per molecule (preferably, a linear polyoxyalkylene polymer having hydroxy groups at both ends thereof) and introduce (meth)acryloyl groups by making use of the hydroxy groups.

An example of the method for synthesizing the polyfunctional macromonomer (a2) is one in which a polyoxyalkylene polymer having hydroxy groups is reacted with a compound having an isocyanate group and a (meth)acryloyl group to form urethane bonds and thus introduce (meth)acryloyl groups.

Specific examples of the compound having an isocyanate group and a (meth)acryloyl group include isocyanatoethyl (meth)acrylate, isocyanatopropyl (meth)acrylate, isocyanatobutyl (meth)acrylate, and isocyanatohexyl (meth)acrylate.

Another example of the method for synthesizing the polyfunctional macromonomer (a2) is one in which a polyoxyalkylene polymer having hydroxy groups is reacted with a diisocyanate compound to introduce isocyanate groups into the polymer and then the polymer is reacted with a compound having a hydroxy group and a (meth)acryloyl group to introduce (meth)acryloyl groups.

Specific examples of the diisocyanate compound include tolylene diisocyanate, hexamethylene diisocyanate, isophorone diisocyanate, and 4,4'-diphenylmethane diisocyanate.

Specific examples of the compound having a hydroxy group and a (meth)acryloyl group include hydroxybutyl (meth)acrylate, hydroxypropyl (meth)acrylate, hydroxyethyl (meth)acrylate, polyethylene glycol mono(meth)acrylate, and polypropylene glycol mono(meth)acrylate.

Still another example of the method for synthesizing the polyfunctional macromonomer (a2) is one in which a polyoxyalkylene polymer having hydroxy groups is reacted with an acid anhydride to introduce carboxyl groups into the polymer and then the polymer is reacted with a compound having an epoxy group and a (meth)acryloyl group to introduce (meth)acryloyl groups.

Specific examples of the acid anhydride include succinic anhydride, maleic anhydride, phthalic anhydride, tetrahydrophthalic anhydride, hexahydrophthalic anhydride, methyltetrahydrophthalic anhydride, methylhexahydrophthalic anhydride, methyl himic anhydride, trimellitic anhydride, methyl nadic anhydride, and dodecylsuccinic anhydride.

Specific examples of the compound having an epoxy group and a (meth)acryloyl group include glycidyl (meth)acrylate.

Yet another example of the method for synthesizing the polyfunctional macromonomer (a2) is to allow a polyoxyalkylene polymer having hydroxy groups to undergo dehydration condensation with methacrylic acid or acrylic acid. To carry out a reaction under mild conditions, the polyoxyalkylene polymer having hydroxy groups may be reacted with methacryloyl chloride, methacryloyl bromide, methacryloyl iodide, acryloyl chloride, acryloyl bromide, or acryloyl iodide.

The number-average molecular weight of the polyfunctional macromonomer (a2) is not limited to a particular range. In terms of ensuring the elongation at break and adhesion of the resulting cured product while ensuring the ease of handling of the polyfunctional macromonomer (a2), the number-average molecular weight is preferably 500 or more, more preferably 2,000 or more, and even more preferably 10,000 or more. To obtain a cured product having high elongation at break, the number-average molecular weight is particularly preferably 20,000 or more. The number-average molecular weight is preferably 100,000 or less, more preferably 70,000 or less, even more preferably 50,000 or less, still even more preferably 40,000 or less, and particularly preferably 30,000 or less.

The weight-average molecular weight of the polyfunctional macromonomer (a2) is not limited to a particular range. In terms of ensuring the mechanical properties and adhesion of the resulting cured product while ensuring the ease of handling of the polyfunctional macromonomer (a2), the weight-average molecular weight is preferably 500 or more, more preferably 2,500 or more, even more preferably 12,000 or more, and particularly preferably 24,000 or more. The weight-average molecular weight is preferably 130,000 or less, more preferably 85,000 or less, even more preferably 60,000 or less, still even more preferably 50,000 or less, and most preferably 40,000 or less.

The polyfunctional macromonomer (a2) is not limited to having a particular molecular weight distribution (weight-average molecular weight (Mw)/number-average molecular weight (Mn)), but preferably has a narrow molecular weight distribution. To be specific, the dispersity Mw/Mn is preferably less than 2.0, more preferably 1.6 or less, even more preferably 1.5 or less, still even more preferably 1.4 or less, and particularly preferably 1.3 or less.

The number-average molecular weight (Mn) and weight-average molecular weight (Mw) of the polyfunctional macromonomer (a2) are measured by GPC (polystyrene equivalent). The details of the measurement method will be described in Examples.

The (meth)acrylic ester copolymer (A) includes a (meth)acrylic ester polymer molecular chain composed of a polymer of the (meth)acrylic ester (a1) etc. and a polyoxyalkylene polymer molecular chain derived from the polyfunctional macromonomer (a2). Since the polyfunctional macromonomer (a2) has more than one (meth)acryloyl groups which are polymerizable groups per molecule, the (meth)acrylic ester copolymer (A) can have a structure in which more than one (meth)acrylic ester polymer molecular chains are bonded to one polyoxyalkylene polymer molecular chain. The polyoxyalkylene polymer molecular chain may be introduced at an end of the (meth)acrylic ester polymer molecular chain or in a side chain (non-terminal moiety) of the (meth)acrylic ester polymer molecular chain. In terms of adhesion, the polyoxyalkylene polymer molecular chain is preferably introduced in a side chain of the (meth)acrylic ester polymer molecular chain.

In particular, in the case where the polyfunctional macromonomer (a2) has (meth)acryloyl groups at both ends of a polyoxyalkylene polymer molecular chain, an H-shaped structure can be formed in which (meth)acrylic ester polymer molecular chains are bonded to both ends of the polyoxyalkylene polymer molecular chain. The polyoxyalkylene polymer molecular chain corresponds to the horizontal bar of "H", and the (meth)acrylic ester polymer molecular chains correspond to the two vertical bars of "H". The H-shaped structure will be described later.

The content of the polyfunctional macromonomer (a2) is preferably from 1 to 70 wt%, more preferably from 5 to 60 wt%, and even more preferably from 10 to 50 wt% relative to the total monomer component of the (meth)acrylic ester copolymer (A). To obtain a cured product having high tensile strength at break, the content of the polyfunctional macromonomer (a2) is preferably less than 50 wt% and more preferably less than 40 wt%. To obtain a cured product having high elongation, the content of the polyfunctional macromonomer (a2) is preferably 35 wt% or more and more preferably 40 wt% or more.

The polyfunctional macromonomer (a2) preferably constitutes 0.08 to 6.0 mol%, more preferably 0.1 to 5.0 mol%, even more preferably 0.15 to 2.3 mol%, of the monomer component of the (meth)acrylic ester copolymer (A). When the content of the polyfunctional macromonomer (a2) is within the above range, the effect of the use of the polyfunctional macromonomer (a2) can be achieved while gelation is prevented during synthesis of the (meth)acrylic ester copolymer (A).

The average number of the molecules of the polyfunctional macromonomer (a2) per molecule of the (meth)acrylic ester copolymer (A) is preferably from 0.02 to 2.0 in terms of the strength of a cured product resulting from curing of the (meth)acrylic ester copolymer (A). The average number is more preferably at least 0.03, even more preferably 0.04 or more, still even more preferably 0.05 or more, particularly preferably 0.07 or more, and most preferably 0.08 or more. The average number is more preferably at most 1.5 and even more preferably 1.0 or less. The average number can be calculated by the following expression.

Expression: number-average molecular weight of (meth)acrylic ester copolymer (A) (g/mol)/(weight of (meth)acrylic ester copolymer (A) (g)/(number of moles of polyoxyalkylene polymer (a2)))

### <Chain Transfer Agent (a3) Having Mercapto Group>

The inclusion of the chain transfer agent (a3) having a mercapto group in the monomer component of the (meth)acrylic ester copolymer (A) can allow the (meth)acrylic ester copolymer (A) to have a relatively narrow molecular weight distribution and can prevent gelation during synthesis of the (meth)acrylic ester copolymer (A), despite the use of the polyfunctional macromonomer (a2). Additionally, the inclusion of the chain transfer agent (a3) allows for preferential synthesis of a polymer molecule in which one molecule of the polyfunctional macromonomer (a2) is introduced in one molecule of the (meth)acrylic ester copolymer (A).

The chain transfer agent (a3) having a mercapto group may have no reactive silicon group, but preferably further has a reactive silicon group. When the chain transfer agent (a3) having a mercapto group further has a reactive silicon group, the reactive silicon group can be introduced at an end of a (meth)acrylic ester polymer molecular chain.

Examples of the chain transfer agent (a3) having a mercapto group include, but are not limited to, 3-mercaptopropyldimethoxymethylsilane, 3-mercaptopropyltrimethoxysilane, (mercaptomethyl)dimethoxymethylsilane, (mercaptomethyl)trimethoxysilane, n-dodecyl mercaptan, tert-dodecyl mercaptan, and lauryl mercaptan.

The content of the chain transfer agent (a3) having a mercapto group is preferably from 0.5 to 12 wt%, more preferably from 1 to 10 wt%, and even more preferably from 2 to 9 wt% relative to the total monomer component of the (meth)acrylic ester copolymer (A). If the content of the chain transfer agent (a3) is more than 10 wt%, the (meth)acrylic ester copolymer component (A) having a low molecular weight could bleed to the surface of the resulting cured product.

The chain transfer agent (a3) having a mercapto group preferably constitutes 0.1 to 20 mol%, more preferably 0.4 to 15 mol%, even more preferably 0.5 to 10 mol%, particularly preferably 0.6 to 8 mol%, of the monomer component of the (meth)acrylic ester copolymer (A). The effect of the use of the chain transfer agent (a3) having a mercapto group can be achieved when the content of the chain transfer agent (a3) is within the above range.

To increase the strength of a cured product resulting from curing of the (meth)acrylic ester copolymer (A), the content of the polyfunctional macromonomer (a2) and the content of the chain transfer agent (a3) having a mercapto group are preferably adjusted such that the molar ratio of the polyoxyalkylene polymer (a2) to the chain transfer agent (a3) having a mercapto group is 0.04 or more. The molar ratio is more preferably 0.05 or more, even more preferably 0.06 or more, still even more preferably 0.08 or more, yet even more preferably 0.1 or more, particularly preferably 0.12 or more, and most preferably 0.15 or more. The upper limit of the molar ratio is not limited to a particular value, but the molar ratio is preferably 1 or less and more preferably 0.5 or less.

The (meth)acrylic ester copolymer (A) can have a substituent (a structure represented by -S-R³ described later) derived from the chain transfer agent (a3) having a mercapto group, and thus can contain sulfur atoms. The sulfur atom concentration in the (meth)acrylic ester copolymer (A) is preferably from 700 to 20,000 ppm and more preferably from 1,000 to 15,000 ppm.

The method for measuring the sulfur atom concentration is not limited to a particular technique. The sulfur atom concentration can be measured by a known elemental analysis method such as organic elemental analysis or fluorescent X-ray analysis. The sulfur atom concentration may be a theoretical value calculated from the total amount of the monomer component used to produce the (meth)acrylic ester copolymer (A) and the amount of the chain transfer agent (a3) having a mercapto group.

### <Monomer (a4) Having Reactive Silicon Group and Polymerizable Unsaturated Group>

The monomer (a4) having a reactive silicon group and a polymerizable unsaturated group is an optional monomer. The monomer (a4) need not be used, but is preferably used. The use of the monomer (a4) allows for introduction of a reactive silicon group in a side chain (non-terminal moiety) of a (meth)acrylic ester polymer molecular chain.

Examples of the monomer (a4) having a reactive silicon group and a polymerizable unsaturated group include: compounds having a (meth)acryloxy group and a reactive silicon group, such as 3-(meth)acryloxypropyltrimethoxysilane, 3-(meth)acryloxypropyltriethoxysilane, 3-(meth)acryloxypropyldimethoxymethylsilane, (meth)acryloxymethyltrimethoxysilane, and (meth)acryloxymethyldimethoxymethylsilane; and compounds having a vinyl group and a reactive silicon group, such as vinyltrimethoxysilane and vinyltriethoxysilane. One of these compounds may be used alone, or two or more thereof may be used in combination.

In the case of using the monomer (a4), the content of the monomer (a4) is preferably from 0.1 to 50 wt%, more preferably from 0.3 to 30 wt%, and even more preferably from 0.5 to 20 wt% relative to the total monomer component of the (meth)acrylic ester copolymer (A). In terms of improving the thixotropy of a curable composition and obtain a cured product having high elongation, the content of the monomer (a4) is preferably 10 wt% or less, more preferably 5 wt% or less, and even more preferably 3 wt% or less.

### <Another Monomer (a5)>

The monomer component of the (meth)acrylic ester copolymer (A) may or may not include another monomer (a5) that is not categorized as any of the compounds (a1) to (a4) described in detail above.

Examples of the other monomer (a5) include: (meth)acrylic monomers that are categorized neither as the (meth)acrylic ester (a1) nor as the monomer (a4) having a reactive silicon group and a polymerizable unsaturated group; and monomers other than such (meth)acrylic monomers. Specific examples of the other monomer (a5) include: (meth)acrylic acid; styrenic monomers such as styrene, vinyltoluene, α-methylstyrene, chlorostyrene, and styrenesulfonic acid; fluorine-containing vinyl monomers such as perfluoroethylene, perfluoropropylene, and vinylidene fluoride; maleic acid; maleic acid derivatives such as maleic anhydride, monoalkyl maleates, and dialkyl maleates; fumaric acid; fumaric acid derivatives such as monoalkyl fumarates and dialkyl fumarates; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; vinyl ester monomers such as vinyl acetate, vinyl propionate, vinyl pivalate, vinyl benzoate, and vinyl cinnamate; olefin monomers such as ethylene and propylene; conjugated diene monomers such as butadiene and isoprene; (meth)acrylamide; (meth)acrylonitrile; and vinyl monomers such as vinyl chloride, vinylidene chloride, allyl chloride, allyl alcohol, ethyl vinyl ether, and butyl vinyl ether. One of these monomers may be used alone, or two or more thereof may be used in combination.

The number-average molecular weight of the (meth)acrylic ester copolymer (A) is not limited to a particular range. The number-average molecular weight as determined by GPC analysis as a polystyrene equivalent molecular weight is preferably from 500 to 50,000, more preferably from 500 to 30,000, and particularly preferably from 1,000 to 10,000. In particular, the number-average molecular weight is preferably 7,000 or less, more preferably 5,000 or less, and more preferably 4,000 or less to obtain the (meth)acrylic ester copolymer (A) having a low viscosity. In order for a mixture of the (meth)acrylic ester copolymer (A) with the polyoxyalkylene polymer (B) to have a low viscosity and exhibit high adhesion, the number-average molecular weight of the (meth)acrylic ester copolymer (A) is preferably 3,500 or less.

The weight-average molecular weight of the (meth)acrylic ester copolymer (A) is not limited to a particular range The weight-average molecular weight as determined by GPC analysis as a polystyrene equivalent molecular weight is preferably from 500 to 80,000, more preferably from 3,000 to 70,000, and particularly preferably from 5,000 to 65,000. In particular, the weight-average molecular weight is preferably 8,000 or more and more preferably 13,000 or more to achieve good mechanical properties. In order for a mixture of the (meth)acrylic ester copolymer (A) with the polyoxyalkylene polymer (B) to have a low viscosity and be formable into a cured product having high strength, the weight-average molecular weight of the (meth)acrylic ester copolymer (A) is preferably 30,000 or less, more preferably 25,000 or less, and even more preferably 20,000 or less.

The weight-average molecular weight of the (meth)acrylic ester copolymer (A) and the weight-average molecular weight of the polyoxyalkylene polymer (a2) are preferably such that the value calculated by the following expression is preferably 0.6 or more.

Expression: (weight-average molecular weight of copolymer (A))/(weight-average molecular weight of polyoxyalkylene polymer (a2))

If the value calculated by the above expression is 0.6 or more, this means that the average number of the molecules of the polyoxyalkylene polymer (a2) that are introduced per molecule of the (meth)acrylic ester copolymer (A) is large. In this case, the strength of a cured product resulting from curing of the (meth)acrylic ester copolymer (A) can be further increased.

In terms of the strength of the cured product, the value calculated by the above expression is more preferably 0.8 or more, even more preferably 1.0 or more, still even more preferably 1.1 or more, particularly preferably 1.2 or more, and most preferably 1.3 or more. The upper limit of the calculated value is not limited to a particular value, but the calculated value is preferably 10 or less and more preferably 5 or less.

The (meth)acrylic ester copolymer (A) is not limited to having a particular molecular weight distribution. In terms of allowing the (meth)acrylic ester copolymer (A) to have a low viscosity, the dispersity of the (meth)acrylic ester copolymer (A) is preferably from 3.0 to 11.0, more preferably from 3.2 to 10.0, and even more preferably from 3.4 to 8.0. The molecular weight distribution of the (meth)acrylic ester copolymer (A) can be determined from the number-average molecular weight and weight-average molecular weight obtained by GPC analysis.

In a preferred aspect, the (meth)acrylic ester copolymer (A) may include a triblock copolymer. The triblock copolymer includes a structure in which two first molecular chains are bonded to each other via one second molecular chain. Each of the first molecular chains includes a (meth)acrylic ester polymer molecular chain, and the second molecular chain includes a polyoxyalkylene polymer molecular chain.

The first molecular chain is a molecular chain formed by copolymerization of the (meth)acrylic ester (a1), the (meth)acryloyl groups of the polyfunctional macromonomer (a2), the chain transfer agent (a3), the optional monomer (a4), and any other optional monomer. A reactive silicon group is bonded to the first molecular chain. In the case where the chain transfer agent (a3) having a mercapto group has a reactive silicon group, the reactive silicon group is bonded to an end of the first molecular chain. In the case of using the monomer (a4) having a reactive silicon group and a polymerizable unsaturated group, the reactive silicon group is bonded to a non-terminal moiety of the first molecular chain.

The second molecular chain corresponds to a polyoxyalkylene polymer backbone in the polyfunctional macromonomer (a2).

The way in which the two first molecular chains and the one second molecular chain are bonded is different from that in common ABA triblock copolymers. Specifically, both ends of the second molecular chain are bonded to a non-terminal moiety of one of the first molecular chains and a non-terminal moiety of the other first molecular chain, respectively. That is, the triblock copolymer includes an H-shaped structure, in which the two vertical bars of "H" correspond to the two first molecular chains, and the one horizontal bar of "H" corresponds to the one second molecular chain.

The (meth)acrylic ester copolymer (A) is not limited to the triblock copolymer having the H-shaped structure, and may include a block copolymer having another structure in addition to the triblock copolymer having the H-shaped structure. Examples of the block copolymer having a structure other than the H-shaped structure include a block copolymer having a structure in which three first molecular chains are bonded to one another via two second molecular chains.

The first and second molecular chains are bonded via an ester bond derived from the (meth)acryloyl group of the polyfunctional macromonomer (b2) (i.e., an ester bond corresponding to the ester bond in the formula (2) given above).

The (meth)acrylic ester copolymer (A) having the first molecular chain composed of a rigid polymer and the second molecular chain composed of a polyoxyalkylene polymer which is a soft polymer is preferred in that the use of such a copolymer (A) can result in a cured product having high strength and high elongation. The term "rigid polymer" as used herein refers to a polymer having a high glass transition temperature. The term "soft polymer" as used herein refers to a polymer having a low glass transition temperature. Specifically, the monomer component of the first molecular chain (monomer component excluding the polyoxyalkylene polymer (a2)) preferably includes at least one monomer selected from the group consisting of a methacrylic ester, isobornyl acrylate, dicyclopentenyl acrylate, and dicyclopentanyl acrylate. The at least one monomer preferably constitutes 60 wt% or more, more preferably 70 wt% or more, of the total monomer component of the first molecular chain.

The first molecular chain is a molecular chain formed as a result of a reaction of the chain transfer agent (a3) having a mercapto group. Thus, the first molecular chain can have, at one end thereof, a substituent derived from the chain transfer agent (a3), in particular a structure represented by -S-R³. In this formula, S is a sulfur atom and R³ is a hydrocarbon group optionally having a reactive silicon group. Examples of the hydrocarbon group include alkyl, aryl, and aralkyl groups having up to 20 carbon atoms. The reactive silicon group is one represented by the formula (1) described above. Specific examples of R³ include a reactive silicon group-containing methyl group, a reactive silicon group-containing propyl group, a *n*-dodecyl group, a *tert*-dodecyl group, and a lauryl group.

As previously stated, the molar ratio of the polyoxyalkylene polymer (a2) to the chain transfer agent (a3) having a mercapto group is preferably 0.04 or more. Accordingly, in the (meth)acrylic ester copolymer (A), the molar ratio of the polyoxyalkylene polymer to the structure represented by -S-R³ is preferably 0.04 or more. When the molar ratio is 0.04 or more, the weight-average molecular weight of the (meth)acrylic ester copolymer (A) is high, and the strength of the resulting cured product can be enhanced. The molar ratio is more preferably 0.05 or more, even more preferably 0.08 or more, still even more preferably 0.1 or more, particularly preferably 0.12 or more, and most preferably 0.15 or more. The upper limit of the molar ratio is not limited to a particular value, but the molar ratio is preferably 1 or less and more preferably 0.5 or less.

### <<Method for Producing (Meth)acrylic Ester Copolymer (A)>>

The (meth)acrylic ester copolymer (A) can be produced by polymerization of the monomer component described above. The polymerization method is not limited to a particular technique and may be commonly used free-radical polymerization. In the present embodiment, even when free-radical polymerization is used, the polymerization can be controlled to produce the (meth)acrylic ester copolymer (A) as a block copolymer. Additionally, the molecular weight distribution of the (meth)acrylic ester copolymer (A) can be made relatively narrow.

Examples of polymerization initiators usable in the free-radical polymerization include: azo compounds such as 2,2' -azobis(2-methylbutyronitrile), dimethyl 2,2'-azobis(2-methylpropionate), 2,2'-azobis(2,4-dimethylvaleronitrile), 2,2'-azobis(4-methoxy-2,4-dimethylvaleronitrile), 2,2'-azobis[*N*-(2-propenyl)-2-methylpropionamide], and 1,1'-azobis(cyclohexane- cyclolnexane-1 -carbonitrile); diacyl peroxides such as benzoyl peroxide, isobutyryl peroxide, isononanoyl peroxide, decanoyl peroxide, lauroyl peroxide, *p*-chlorobenzoyl peroxide, and di(3,5,5-trimethylhexanoyl) peroxide; peroxydicarbonates such as diisopropyl perdicarbonate, di-*sec*-butyl perdicarbonate, di-2-ethylhexyl perdicarbonate, di-1-methylheptyl perdicarbonate, di-3-methoxybutyl perdicarbonate, and dicyclohexyl perdicarbonate; peroxyesters such as *tert*-butyl perbenzoate, *tert*-butyl peracetate, *tert*-butyl per-2-ethylhexanoate, *tert*-butyl perisobutyrate, *tert*-butyl perpivalate, *tert*-butyl diperadipate, and cumyl perneodecanoate; ketone peroxides such as methyl ethyl ketone peroxide and cyclohexanone peroxide; dialkyl peroxides such as di-*tert*-butyl peroxide, dicumyl peroxide, *tert*-butyl cumyl peroxide, and 1,1-di(*tert*-hexylperoxy)-3,3,5-trimethylcyclohexane; hydroperoxides such as cumene hydroperoxide and *tert*-butyl hydroperoxide; and peroxides such as 1,1-di(*tert*-hexylperoxy)-3,3,5-trimethylcyclohexane. One of these polymerization initiators may be used alone, or two or more thereof may be used in combination.

Examples of solvents usable in the free-radical polymerization include: aromatic solvents such as toluene, xylene, styrene, ethylbenzene, *p*-dichlorobenzene, di-2-ethylhexyl phthalate, and di-*n*-butyl phthalate; aliphatic hydrocarbon solvents such as hexane, heptane, octane, cyclohexane, and methylcyclohexane; carboxylic ester compounds such as butyl acetate, *n*-propyl acetate, and isopropyl acetate; ketone compounds such as methyl isobutyl ketone and methyl ethyl ketone; dialkyl carbonate compounds such as dimethyl carbonate and diethyl carbonate; and alcohol compounds such as *n*-propanol, 2-propanol, *n*-butanol, 2-butanol, isobutanol, *tert*-butanol, and amyl alcohol. Among these, the alcohol compounds are preferred in that the use of any of the alcohol compounds leads to a narrow molecular weight distribution. The aromatic solvents are preferred in that they have high dissolving power. The aliphatic hydrocarbon solvents are preferred in that they have a low level of odor. The molecular weight distribution of the (meth)acrylic ester copolymer (A) is influenced by the amount of the chain transfer agent (a3) added and the type of the solvent. In the case where the amount of the chain transfer agent (a3) added is 3 wt% or less, the molecular weight distribution is influenced significantly by the type of the solvent. When the (meth)acrylic ester copolymer (A) having a narrow molecular weight distribution is desired, it is preferable to use isobutanol as a solvent.

As previously stated, the use of the monomer (a4) having a reactive silicon group and a polymerizable unsaturated group or the use of the chain transfer agent (a3) having a reactive silicon group in addition to a mercapto group leads to the (meth)acrylic ester copolymer (A) having a reactive silicon group. The use of the monomer (a4) having a reactive silicon group and a polymerizable unsaturated group and the use of the chain transfer agent (a3) having a reactive silicon group in addition to a mercapto group may be combined. With the use of the monomer (a4) having a reactive silicon group and a polymerizable unsaturated group, the reactive silicon group can be randomly introduced in a side chain of a (meth)acrylic ester polymer molecular chain. With the use of the chain transfer agent (a3) having a reactive silicon group in addition to a mercapto group, the reactive silicon group can be introduced at an end of a (meth)acrylic ester polymer molecular chain.

The following methods can also be used to further introduce reactive silicon groups into the (meth)acrylic ester copolymer (A).
(i) A method in which a monomer having a reactive functional group (V group) is copolymerized with the (meth)acrylic ester (a1) etc. and then the resulting copolymer is reacted with a compound having a reactive silicon group and a functional group reactive with the V group. Specific examples of the method (i) include: a method in which 2-hydroxyethyl acrylate is copolymerized and then the resulting copolymer is reacted with an isocyanatosilane compound having a reactive silicon group; and a method in which glycidyl acrylate is copolymerized and then the resulting copolymer is reacted with an aminosilane compound having a reactive silicon group.
(ii) A method in which terminal functional groups of a (meth)acrylic ester copolymer synthesized by living radical polymerization are modified to introduce reactive silicon groups. A (meth)acrylic ester copolymer resulting from living radical polymerization permits easy introduction of functional groups at the polymer ends. The reactive silicon groups can be introduced at the polymer ends by modifying the introduced functional groups.

Examples of compounds that can be used in the method (i) as the compound having a reactive silicon group and a functional group reactive with the V group include: isocyanatosilane compounds such as 3-isocyanatopropyldimethoxymethylsilane, 3-isocyanatopropyltrimethoxysilane, 3-isocyanatopropyltriethoxysilane, isocyanatomethyldimethoxymethylsilane, isocyanatomethyltrimethoxysilane, and isocyanatomethyltriethoxysilane; epoxysilane compounds such as 3-glycidoxypropyldimethoxymethylsilane, 3-glycidoxypropyltrimethoxysilane, 3-glycidoxypropyltriethoxysilane, glycidoxymethyldimethoxymethylsilane, glycidoxymethyltrimethoxysilane, and glycidoxymethyltriethoxysilane; and aminosilane compounds such as 3-aminopropyldimethoxymethylsilane, 3-aminopropyltrimethoxysilane, 3-aminopropyltriethoxysilane, aminomethyldimethoxymethylsilane, aminomethyltrimethoxysilane, aminomethyltriethoxysilane, *N*-cyclohexylaminomethyldimethoxymethylsilane, *N*-cyclohexylaminomethyltrimethoxysilane, and *N*-cyclohexylaminomethyltriethoxysilane.

In the method (ii), any modification reaction can be used. Examples of the modification reaction method include: a method using a compound having a reactive silicon group and a reactive group reactive with the terminal functional groups resulting from living radical polymerization; and a method in which double bonds are introduced at the polymer ends using a compound having a double bond and a reactive group reactive with the terminal functional groups and subsequently reactive silicon groups are introduced by means of a process such as a hydrosilylation reaction.

### <<Polyoxyalkylene Polymer (B)>>

### <Reactive Silicon Group>

The polyoxyalkylene polymer (B) has a reactive silicon group represented by the formula (1) described above. The reactive silicon group of the polyoxyalkylene polymer (B) may be the same or different from the reactive silicon group of the (meth)acrylic ester copolymer (A).

Specific examples of the reactive silicon group of the polyoxyalkylene polymer (B) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (*N,N*-diethylaminomethyl)dimethoxysilyl, and (*N,N-*diethylaminomethyl)diethoxysilyl groups. Among these, methyldimethoxysilyl, trimethoxysilyl, triethoxysilyl, (chloromethyl)dimethoxysilyl, (methoxymethyl)dimethoxysilyl, (methoxymethyl)diethoxysilyl, and (*N,N*-diethylaminomethyl)dimethoxysilyl groups are preferred since they exhibit high activity. A methyldimethoxysilyl group is preferred to obtain a cured product having high elongation. To obtain a cured product having high strength, trimethoxysilyl and triethoxysilyl groups are more preferred, and a trimethoxysilyl group is even more preferred.

The polyoxyalkylene polymer (B) may have one or less reactive silicon groups on average per terminal moiety or may have more than one reactive silicon groups on average per terminal moiety. The statement that the polyoxyalkylene polymer (B) has more than one reactive silicon groups on average per terminal moiety means that the polyoxyalkylene polymer (B) includes a polyoxyalkylene having two or more reactive silicon groups in one terminal moiety as represented by the following formula (3).

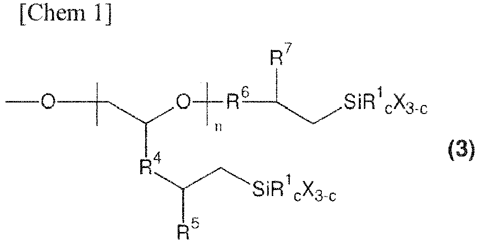

The polyoxyalkylene polymer (B) may include only a polyoxyalkylene having two or more reactive silicon groups in one terminal moiety or may include both a polyoxyalkylene having two or more reactive silicon groups in one terminal moiety and a polyoxyalkylene having one reactive silicon group in one terminal moiety. Terminal moieties of one polyoxyalkylene molecule may include both a terminal moiety having two or more reactive silicon groups and a terminal moiety having one reactive silicon group. Although the polyoxyalkylene polymer (B) as a whole has more than one reactive silicon groups on average per terminal moiety, the polyoxyalkylene polymer (B) may include a polyoxyalkylene having a terminal moiety having no reactive silicon group.

In the formula (3), R⁴ and R⁶ are each independently a divalent linkage group having 1 to 6 carbon atoms, atoms of R⁴ and R⁶ that are bonded to carbon atoms adjacent to R⁴ and R⁶ are each independently carbon, oxygen, or nitrogen, R⁵ and R⁷ are each independently hydrogen or a hydrocarbon group having 1 to 10 carbon atoms, n is an integer from 1 to 10, and R¹, X, and c are as defined above for the formula (1).

R⁴ and R⁶ may each independently be a divalent organic group having 1 to 6 carbon atoms or a hydrocarbon group optionally containing an oxygen atom. The number of carbon atoms in the hydrocarbon group is preferably from 1 to 4, more preferably from 1 to 3, and even more preferably 1 or 2. Specific examples of R⁴ include -CH₂OCH₂-, -CH2O-, and -CH₂-, and R⁴ is preferably -CH₂OCH₂-. Specific examples of R⁶ include -CH₂- and -CH₂CH₂-, and R⁶ is preferably -CH₂-.

The number of carbon atoms in the hydrocarbon group represented by R⁵ or R⁷ is preferably from 1 to 5, more preferably from 1 to 3, and even more preferably 1 or 2. Specific examples of R⁵ and R⁷ include a hydrogen atom, a methyl group, and an ethyl group, and R⁵ and R⁷ are preferably hydrogen atoms or methyl groups and more preferably hydrogen atoms.

In a particularly preferred aspect, the terminal moiety represented by the formula (3) contains -CH₂OCH₂- as R4, -CH₂- as R⁶, and hydrogen atoms as R⁵ and R⁷. The integer n is preferably from 1 to 5, more preferably from 1 to 3, and even more preferably 1 or 2. It should be noted that n is not limited to one value and terminal moieties having different values of n may be present.

The polyoxyalkylene polymer (B) preferably has more than 1.0 reactive silicon groups on average per terminal moiety. The average number of reactive silicon groups is more preferably 1.1 or more, even more preferably 1.5 or more, and still even more preferably 2.0 or more. The average number is preferably 5 or less and more preferably 3 or less.

In the polyoxyalkylene polymer (B), the number of terminal moieties having more than one reactive silicon groups is preferably 0.5 or more, more preferably 1.0 or more, even more preferably 1.1 or more, and still even more preferably 1.5 or more on average per molecule of the polyoxyalkylene polymer (B). The average number is preferably 4 or less and more preferably 3 or less.

The polyoxyalkylene polymer (B) may have a reactive silicon group in a site other than the terminal moieties. However, it is preferable that the polyoxyalkylene polymer (B) should have reactive silicon groups only in the terminal moieties, because in this case a rubbery cured product having high elongation and low elastic modulus is likely to be obtained.

In the polyoxyalkylene polymer (B), the average number of reactive silicon groups per molecule is preferably more than 1.0, more preferably 1.2 or more, even more preferably 1.3 or more, still even more preferably 1.5 or more, and particularly preferably 1.7 or more. The average number is preferably 6.0 or less, more preferably 5.5 or less, and most preferably 5.0 or less. When the average number is more than 1.0 but not more than 6.0, a cured product having high strength and high elongation can be obtained.

### <Main Chain Structure>

The polyoxyalkylene polymer (B) is not limited to having a particular backbone, and examples of the backbone of the polyoxyalkylene polymer (B) include polyoxyethylene, polyoxypropylene, polyoxybutylene, polyoxytetramethylene, polyoxyethylene-polyoxypropylene copolymer, and polyoxypropylene-polyoxybutylene copolymer. Among these, polyoxypropylene is preferred. Preferably, the polyoxyalkylene polymer (B) has only a polyoxyalkylene polymer backbone and has no (meth)acrylic ester polymer backbone.

In terms of obtaining a cured product that exhibits good mechanical properties, the number-average molecular weight of the polyoxyalkylene polymer (B), as determined by GPC analysis as a polystyrene equivalent molecular weight, is preferably 3,000 or more, more preferably 10,000 or more, even more preferably 15,000 or more, still even more preferably 20,000 or more, and particularly preferably 25,000 or more. The number-average molecular weight is preferably at most 100,000, more preferably 50,000 or less, even more preferably 45,000 or less, and particularly preferably 40,000 or less.

The molecular weight of the polyoxyalkylene polymer (B) can be expressed also as a terminal group equivalent molecular weight. The terminal group equivalent molecular weight is determined as follows: before introduction of reactive silicon groups, an organic polymer precursor is subjected to titration analysis based on the principles of the hydroxy value measurement method as specified in JIS K 1557 and the iodine value measurement method as specified in JIS K 0070 to directly measure the terminal group concentration, from which the terminal group equivalent molecular weight is calculated taking into account the architecture of the organic polymer (in particular, the degree of branching which depends on the polymerization initiator used). The terminal group equivalent molecular weight of the polyoxyalkylene polymer (B) can be determined also by creating a calibration curve representing the relationship between the number-average molecular weight of the organic polymer precursor as determined by common GPC analysis and the terminal group equivalent molecular weight, determining the number-average molecular weight of the polyoxyalkylene polymer (B) by GPC analysis, and converting the determined number-average molecular weight to the terminal group equivalent molecular weight based on the calibration curve.

The polyoxyalkylene polymer (B) is not limited to having a particular molecular weight distribution (Mw/Mn), but preferably has a narrow molecular weight distribution. The dispersity Mw/Mn is preferably less than 2.0, more preferably 1.6 or less, even more preferably 1.5 or less, and particularly preferably 1.4 or less. In terms of improving various mechanical properties such as durability and elongation of the cured product, the dispersity Mw/Mn is preferably 1.2 or less. The molecular weight distribution of the polyoxyalkylene polymer (B) can be determined from the number-average molecular weight and weight-average molecular weight obtained by GPC analysis.

The main chain structure of the polyoxyalkylene polymer (B) may be linear or branched. To obtain a cured product having high elongation, the main chain structure of the polyoxyalkylene polymer (B) is preferably linear.

### <Method for Synthesizing Polyoxyalkylene Polymer (B)>

Hereinafter, how to synthesize the polyoxyalkylene polymer (B) will be described.

The polyoxyalkylene polymer (B) can be synthesized by an ordinary method. The polyoxyalkylene polymer (B) that has one or less reactive silicon groups on average per terminal moiety can be obtained by introducing one unsaturated carbon-carbon bond per end of a hydroxy-terminated polymer resulting from polymerization and then reacting a reactive silicon group-containing compound with the introduced unsaturated carbon-carbon bonds. To introduce the unsaturated carbon-carbon bonds into the polymer, an unsaturated carbon-carbon bond-containing halogenated hydrocarbon compound described later can be used. The halogenated hydrocarbon compound used can be a later-described carbon-carbon double bond-containing halogenated hydrocarbon compound such as allyl chloride or can be a carbon-carbon triple bond-containing halogenated hydrocarbon compound such as propargyl chloride.

The polyoxyalkylene polymer (B) that has more than one reactive silicon groups on average per terminal moiety is preferably obtained by introducing two or more unsaturated carbon-carbon bonds per end of a hydroxy-terminated polymer resulting from polymerization and then reacting a reactive silicon group-containing compound with the introduced unsaturated carbon-carbon bonds. The following describes this synthesis method.

### (Polymerization)

The backbone of the polyoxyalkylene polymer (B) is preferably formed by a method in which an epoxy compound is polymerized with a hydroxy group-containing initiator in the presence of a double metal cyanide complex catalyst such as a zinc hexacyanocobaltate-glyme complex.

Examples of the hydroxy group-containing initiator include compounds containing one or more hydroxy groups, such as ethylene glycol, propylene glycol, glycerin, pentaerythritol, low-molecular-weight polyoxypropylene glycol, polyoxypropylene triol, allyl alcohol, polypropylene monoallyl ether, and polypropylene monoalkyl ether.

Examples of the epoxy compound include alkylene oxides such as ethylene oxide and propylene oxide and glycidyl ethers such as methyl glycidyl ether and allyl glycidyl ether. Among these, propylene oxide is preferred.

### (Introduction of Unsaturated Carbon-Carbon Bonds)

The introduction of two or more unsaturated carbon-carbon bonds into one terminal moiety is preferably accomplished using a method in which an alkali metal salt is allowed to act on the hydroxy-terminated polymer and thereafter the polymer is reacted first with an unsaturated carbon-carbon bond-containing epoxy compound and then with an unsaturated carbon-carbon bond-containing halogenated hydrocarbon compound. With the use of this method, the molecular weight and molecular weight distribution of the polymer main chain can be controlled by adjusting the polymerization conditions, and at the same time the reactive groups can be introduced efficiently and reliably.

The alkali metal salt is preferably sodium hydroxide, sodium methoxide, sodium ethoxide, potassium hydroxide, potassium methoxide, or potassium ethoxide and more preferably sodium methoxide or potassium methoxide. Sodium methoxide is particularly preferred in terms of availability.

The temperature at which the alkali metal salt is allowed to act on the hydroxy-terminated polymer is preferably from 50 to 150°C and more preferably from 110 to 140°C. The time for which the alkali metal salt is allowed to act on the hydroxy-terminated polymer is preferably from 10 minutes to 5 hours and more preferably from 30 minutes to 3 hours.

A compound represented by the following formula (3') is particularly suitable for use as the unsaturated carbon-carbon bond-containing epoxy compound.

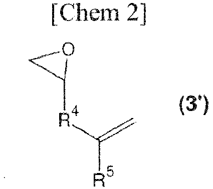

In the formula (3'). R⁴ and R⁵ are as defined above. Specific examples of the unsaturated carbon-carbon bond-containing epoxy compound include allyl glycidyl ether, methallyl glycidyl ether, glycidyl acrylate, glycidyl methacrylate, butadiene monoxide, and 1 ,4-cyclopentadiene monoepoxide, which are preferred in terms of reaction activity. Allyl glycidyl ether is particularly preferred.

The amount of the unsaturated carbon-carbon bond-containing epoxy compound to be added can be freely chosen taking into account the amount of the unsaturated carbon-carbon bonds to be introduced into the polymer and the reactivity of the epoxy compound with the polymer. In particular, the molar ratio of the epoxy compound to the hydroxy groups of the hydroxy-terminated polymer is preferably 0.2 or more and more preferably 0.5 or more. The molar ratio is preferably 5.0 or less and more preferably 2.0 or less.

The reaction temperature at which the hydroxy group-containing polymer is subjected to a ring-opening addition reaction with the unsaturated carbon-carbon bond-containing epoxy compound is preferably from 60 to 150°C and more preferably from 110 to 140°C.

Examples of the carbon-carbon double bond-containing halogenated hydrocarbon compound include vinyl chloride, allyl chloride, methallyl chloride, vinyl bromide, allyl bromide, methallyl bromide, vinyl iodide, allyl iodide, and methallyl iodide. In terms of ease of handling, allyl chloride and methallyl chloride are more preferred.

Examples of the carbon-carbon triple bond-containing halogenated hydrocarbon compound include propargyl chloride, propargyl bromide, and propargyl iodide.

The amount of the unsaturated carbon-carbon bond-containing halogenated hydrocarbon compound to be added is not limited to a particular range. The molar ratio of the halogenated hydrocarbon compound to the hydroxy groups of the hydroxy-terminated polymer is preferably 0.7 or more and more preferably 1.0 or more. The molar ratio is preferably 5.0 or less and more preferably 2.0 or less.

The temperature at which the unsaturated carbon-carbon bond-containing halogenated hydrocarbon compound is reacted with the polymer is preferably from 50 to 150°C and more preferably from 110 to 140°C. The reaction time is preferably from 10 minutes to 5 hours and more preferably from 30 minutes to 3 hours.

### (Introduction of Reactive Silicon Groups)

The method for introducing reactive silicon groups is not limited to a particular technique, and known methods can be used. The following are examples of the introduction method.
(iii) A method in which a hydrosilane compound is added to an unsaturated carbon-carbon bond-containing polymer by a hydrosilylation reaction.
(iv) A method in which an unsaturated carbon-carbon bond-containing polymer is reacted with a compound having both a reactive silicon group and a group capable of reacting with the unsaturated carbon-carbon bond to form a bond (this compound is also referred to as a "silane coupling agent"). For example, the group capable of reacting with the unsaturated carbon-carbon bond to form a bond is, but not limited to, a mercapto group.
(v) A method in which a reactive group-containing polymer is reacted with a silane coupling agent. Examples of the combination of the reactive group of the reactive group-containing polymer and the reactive group of the silane coupling agent include, but are not limited to, a combination of a hydroxy group and an isocyanate group, a combination of a hydroxy group and an epoxy group, a combination of an amino group and an isocyanate group, a combination of an amino group and a thioisocyanate group, a combination of an amino group and an epoxy group, a combination of an amino group and an α,β-unsaturated carbonyl group (Michael addition reaction), a combination of a carboxy group and an epoxy group, and a combination of an unsaturated bond and a mercapto group.

The method (iii) is preferred in that the reaction is easy to conduct, the amount of the reactive silicon groups to be introduced can be adjusted, and the resulting polyoxyalkylene polymer (B) has stable physical properties. The methods (iv) and (v) are preferred in that these methods permit a wide choice of reactions and allow the degree of reactive silicon group introduction to be easily increased.

Examples of the hydrosilane compound that can be used in the method (iii) include, but are not limited to, trimethoxysilane, triethoxysilane, tris(2-propenyloxy)silane, triacetoxysilane, dimethoxymethylsilane, diethoxymethylsilane, dimethoxyethylsilane, (chloromethyl)dimethoxysilane, (chloromethyl)diethoxysilane, (methoxymethyl)dimethoxysilane, (methoxymethyl)diethoxysilane, (*N,N*-diethylaminomethyl)dimethoxysilane, and (*N,N*-diethylaminomethyl)diethoxysilane.

As to the amount of the hydrosilane compound used, the molar ratio of the compound to the unsaturated carbon-carbon bonds of the precursor polymer (the number of moles of hydrosilane/the number of moles of unsaturated carbon-carbon bonds) is preferably from 0.05 to 10 in terms of reactivity and more preferably from 0.3 to 2 in terms of economy.

The hydrosilylation reaction can be accelerated by using a catalyst. The hydrosilylation catalyst used may be any of known catalysts such as various complexes of cobalt, nickel, iridium, platinum, palladium, rhodium, and ruthenium. Examples of the catalyst that can be used include: platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as Pt(CH₂=CH₂)₂(PPh₃) and Pt(CH₂=CH₂)₂Cl₂; platinum-vinyl siloxane complexes such as Pt{(vinyl)Me₂SiOSiMe₂(vinyl)} and Pt{Me(vinyl)SiO}₄; platinum-phosphine complexes such as Pt(PPh₃)₄ and Pt(PBu₃)₄; and platinum-phosphite complexes such as Pt{P(OPh)₃}₄. The use of a platinum catalyst such as chloroplatinic acid or a platinum-vinyl siloxane complex is preferred in terms of reaction efficiency.

Examples of the silane coupling agent that can be used in the method (iv) or (v) include: mercaptosilanes reactive with unsaturated bonds, such as 3-mercaptopropyltrimethoxysilane, 3-mercaptopropyldimethoxymethylsilane, 3-mercaptopropyltriethoxysilane, mercaptomethyltriethoxysilane, and mercaptomethyldimethoxymethylsilane; isocyanatosilanes reactive with hydroxy groups, such as 3-isocyanatopropyltrimethoxysilane, 3-isocyanatopropyldimethoxymethylsilane, 3-isocyanatopropyltriethoxysilane, isocyanatomethyltrimethoxysilane, isocyanatomethyltriethoxysilane, and isocyanatomethyldimethoxymethylsilane; epoxysilanes reactive with hydroxy, amino, or carboxy groups, such as 3-glycidoxypropyltrimethoxysilane, 3-glycidoxypropyldimethoxymethylsilane, 3-glycidoxypropyltriethoxysilane, glycidoxymethyltrimethoxysilane, glycidoxymethyltriethoxysilane, and glycidoxymethyldimethoxymethylsilane; aminosilanes reactive with isocyanate or thioisocyanate groups, such as 3-aminopropyltrimethoxysilane, 3-aminopropyldimethoxymethylsilane, 3-aminopropyltriethoxysilane, 3-(2-aminoethyl)propyltrimethoxysilane, 3-(2-aminoethyl)propyldimethoxymethylsilane, 3-(2-aminoethyl)propyltriethoxysilane, 3-(*N*-ethylamino)-2-methylpropyltrimethoxysilane, 3-ureidopropyltrimethoxysilane, 3-ureidopropyltriethoxysilane, *N*-phenyl-3-aminopropyltrimethoxysilane, *N*-benzyl-3-aminopropyltrimethoxysilane, *N*-cyclohexylaminomethyltriethoxysilane, *N*-cyclohexylaminomethyldiethoxymethylsilane, *N*-phenylaminomethyltrimethoxysilane, (2-aminoethyl)aminomethyltrimethoxysilane, *N,N*'-bis[3-(trimethoxysilyl)propyl]ethylenediamine, and bis(3-(trimethoxysilyl)propyl)amine; and hydroxyalkylsilanes such as 3-hydroxypropyltrimethoxysilane and hydroxymethyltriethoxysilane.

The main chain of the polyoxyalkylene polymer (B) may contain an ester bond or an amide segment represented by the following formula (4) insofar as the effect of the present invention is not impaired.

-NR⁸-C(=O)- (4)

In the formula (4), R⁸ is an organic group having 1 to 10 carbon atoms or a hydrogen atom.

A cured product obtained from a curable composition containing the polyoxyalkylene polymer (B) containing an ester bond or an amide segment can have high hardness and high strength thanks to the action of hydrogen bonds. However, the polyoxyalkylene polymer (B) containing an amide segment could be cleaved due to heat or any other cause. Additionally, the curable composition containing the polyoxyalkylene polymer (B) containing an amide segment tends to have a high viscosity. In view of the above advantages and disadvantages, a polyoxyalkylene containing an amide segment may be used as the polyoxyalkylene polymer (B), or a polyoxyalkylene free of any amide segment may be used as the polyoxyalkylene polymer (B).

Examples of the amide segment represented by the formula (4) include an amide segment formed by a reaction between an isocyanate group and a hydroxy group, an amide segment formed by a reaction between an amino group and a carbonate, an amide segment formed by a reaction between an isocyanate group and an amino group, and an amide segment formed by a reaction between an isocyanate group and a mercapto group. A segment formed by a reaction between an amide segment containing an activated hydrogen atom and an isocyanate group is also categorized as the amide segment represented by the formula (4).

An example of the method for producing the amide segment-containing polyoxyalkylene polymer (B) is one in which a polyoxyalkylene terminated by an activated hydrogen-containing group is reacted with an excess amount of polyisocyanate compound to synthesize a polymer terminated by an isocyanate group and after or simultaneously with the synthesis, the Z group of a silicon compound represented by the following formula (5) is reacted with all or part of the isocyanate groups of the synthesized polymer.

Z-R⁹-SiR¹_{c}X_{3-c} (5)

In the formula (5), R¹, X, and c are as defined above, R⁹ is a divalent organic group and preferably a divalent hydrocarbon group having 1 to 20 carbon atoms, Z is a hydroxy, carboxy, mercapto, primary amino, or secondary amino group.

Examples of the silicon compound represented by the formula (5) include, but are not limited to: amino group-containing silanes such as γ-aminopropyldimethoxymethylsilane, γ-aminopropyltrimethoxysilane, *N*-(β-aminoethyl)-γ-aminopropyltrimethoxysilane, *N*-(β-aminoethyl)-γ-aminopropyldimethoxymethylsilane, (*N*-phenyl)-γ-aminopropyltrimethoxysilane, and *N*-ethylaminoisobutyltrimethoxysilane; hydroxy group-containing silanes such as γ-hydroxypropyltrimethoxysilane; and mercapto group-containing silanes such as γ-mercaptopropyltrimethoxysilane and mercaptomethyltriethoxysilane. Additionally, as described in Japanese Laid-Open Patent Application Publication No. H6-211879 (U.S. Patent No. 5364955), Japanese Laid-Open Patent Application Publication No. H10-53637 (U.S. Patent No. 5756751), Japanese Laid-Open Patent Application Publication No. H10-204144 (EP 0831108), Japanese Laid-Open Patent Application Publication No. 2000-169544, and Japanese Laid-Open Patent Application Publication No. 2000-169545, a product of a Michael addition reaction between any of various α,β-unsaturated carbonyl compounds and any of various primary amino group-containing silanes or a product of a Michael addition reaction between any of various (meth)acryloyl group-containing silanes and any of various primary amino group-containing compounds can also be used as the silicon compound represented by the formula (5).

Another example of the method for producing the amide segment-containing polyoxyalkylene polymer (B) is one in which a polyoxyalkylene terminated by an activated hydrogen-containing group is reacted with a reactive silicon group-containing isocyanate compound represented by the following formula (6).

O-C-N-R⁹-SiR¹_{c}X_{3-c} (6)

In the formula (6), R⁹, R¹, X, and c are as defined above.

Examples of the reactive silicon group-containing isocyanate compound represented by the formula (6) include, but are not limited to, γ-trimethoxysilylpropyl isocyanate, γ-triethoxysilylpropyl isocyanate, γ-methyldimethoxysilylpropyl isocyanate, γ-methyldiethoxysilylpropyl isocyanate, γ-(methoxymethyl)dimethoxysilylpropyl isocyanate, trimethoxysilylmethyl isocyanate, triethoxymethylsilylmethyl isocyanate, dimethoxymethylsilylmethyl isocyanate, diethoxymethylsilylmethyl isocyanate, and (methoxymethyl)dimethoxysilylmethyl isocyanate.

In the case where the polyoxyalkylene polymer (B) contains amide segments, the number of the amide segments per molecule of the polyoxyalkylene polymer (B) (the average number of the amide segments) is preferably from 1 to 10, more preferably from 1.5 to 5, and particularly preferably from 2 to 3 in terms of curability and viscosity. To reduce the viscosity of the curable composition and improve the workability of the curable composition, it is preferable for the polyoxyalkylene polymer (B) to be free of any amide segment.

Methods for blending the (meth)acrylic ester copolymer (A) and the polyoxyalkylene polymer (B) are proposed, for example, in Japanese Laid-Open Patent Application Publication No. S59-122541, Japanese Laid-Open Patent Application Publication No. S63-112642, Japanese Laid-Open Patent Application Publication No. H6-172631, and Japanese Laid-Open Patent Application Publication No. H11-116763. An alternative method is to synthesize the (meth)acrylic ester copolymer (A) by copolymerizing the monomer component of the (meth)acrylic ester copolymer (A) in the presence of the polyoxypropylene polymer (B).

In the curable composition according to the present embodiment, the (meth)acrylic ester copolymer (A):polyoxyalkylene polymer (B) weight ratio can be set as appropriate in view of the effect of the invention and is preferably from 5:95 to 50:50. When the weight ratio is in this range, a cured product having high tensile strength and high bond strength can be obtained. The polymer (A):polymer (B) weight ratio is more preferably from 20:80 to 50:50 and even more preferably from 30:70 to 50:50.

### <<Curable Composition>>

The present embodiment relates to a curable composition containing the (meth)acrylic ester copolymer (A) and the polyoxyalkylene polymer (B). The curable composition may contain only the (meth)acrylic ester copolymer (A) and the polyoxyalkylene polymer (B) as reactive silicon group-containing polymers or may contain another reactive silicon group-containing polymer in addition to the (meth)acrylic ester copolymer (A) and the polyoxyalkylene polymer (B).

### <<Silanol Condensation Catalyst>>

The curable composition according to the present embodiment preferably contains a silanol condensation catalyst in order to accelerate a condensation reaction of the reactive silicon groups of the (meth)acrylic ester copolymer (A) and the polyoxyalkylene polymer (B) and increase the polymer chain length or induce polymer crosslinking.

Examples of the silanol condensation catalyst include an organotin compound, a metal carboxylate, an amine compound, a carboxylic acid, and an alkoxy metal.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), a reaction product of dibutyltin oxide and a silicate compound, a reaction product of dibutyltin oxide and a phthalic ester, dioctyltin diacetate, dioctyltin dilaurate, dioctyltin bis(ethyl maleate), dioctyltin bis(octyl maleate), dioctyltin bis(acetylacetonate), dioctyltin distearate, dioctyltin oxide, and a reaction product of dioctyltin oxide and a silicate compound.

Specific examples of the metal carboxylate include tin carboxylate, bismuth carboxylate, titanium carboxylate, zirconium carboxylate, iron carboxylate, potassium carboxylate, and calcium carboxylate. The metal carboxylate may be a combination of any of carboxylic acids mentioned below and any of various metals.

Specific examples of the amine compound include: amines such as octylamine, 2-ethylhexylamine, laurylamine, and stearylamine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butylbiguanide, l-(*o*-tolyl)biguanide, and 1-phenylbiguanide; amino group-containing silane coupling agents; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Other silanol condensation catalysts that can be used include fluorine anion-containing compounds, photoacid generators, and photobase generators.

Two or more different silanol condensation catalysts may be used in combination. For example, the combined use of the amine compound and carboxylic acid as mentioned above or of the amine compound and alkoxy metal as mentioned above can provide a reactivity-enhancing effect.

In the case where a silanol condensation catalyst is used, the amount of the silanol condensation catalyst is preferably from 0.001 to 20 parts by weight, more preferably from 0.01 to 15 parts by weight, and particularly preferably from 0.01 to 10 parts by weight per 100 parts by weight of the total amount of the (meth)acrylic ester copolymer (A) and the polyoxyalkylene polymer (B).

### <<Additional Components>>

The curable composition according to the present embodiment, which contains the (meth)acrylic ester copolymer (A), the polyoxyalkylene polymer (B), and optionally a silanol condensation catalyst, may further contain additional components such as a filler, an adhesion promoter, an anti-sagging agent, an antioxidant, a light stabilizer, an ultraviolet absorber, and another resin. The curable composition according to the present embodiment may, if necessary, contain various additives to adjust the physical properties of the composition or a cured product of the composition. Examples of the additives include a plasticizer, a solvent, a diluent, a photocurable material, an oxygen-curable material, a surface modifier, a silicate, a curability modifier, a radical inhibitor, a metal deactivator, an antiozonant, a phosphorus-based peroxide decomposer, a lubricant, a pigment, a fungicide, a flame retardant, and a blowing agent.

### <Filler>

The curable composition according to the present embodiment can contain a filler. Examples of the filler include ground calcium carbonate, colloidal calcium carbonate, magnesium carbonate, diatomite, clay, talc, titanium oxide, fumed silica, precipitated silica, crystalline silica, molten silica, wet silica, silicic anhydride, hydrated silicic acid, alumina, carbon black, ferric oxide, aluminum fines, zinc oxide, activated zinc oxide, PVC powder, PMMA powder, and glass fibers or filaments.

The amount of the filler used is preferably from 1 to 300 parts by weight and more preferably from 10 to 250 parts by weight per 100 parts by weight of the total amount of the (meth)acrylic ester copolymer (A) and the polyoxyalkylene polymer (B).

An organic or inorganic balloon may be added to reduce the weight (or reduce the specific gravity) of the composition.

### <Adhesion Promoter>

The curable composition according to the present embodiment can contain an adhesion promoter. A silane coupling agent or a reaction product of the silane coupling agent can be used as the adhesion promoter.

Specific examples of the silane coupling agent include: amino group-containing silanes such as γ-aminopropyltrimethoxysilane, γ-aminopropylmethyldimethoxysilane, *N*-β-aminoethyl-γ-aminopropyltrimethoxysilane, *N*-β-aniinoethyl-γ-aminopropylmethyldimethoxysilane, *N*-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. Condensation products of various silane coupling agents can also be used, and examples of the condensation products include a condensation product of an amino group-containing silane and a product of condensation of an amino group-containing silane with another alkoxysilane. Reaction products of various silane coupling agents can also be used, and examples of the reaction products include a reaction product of an amino group-containing silane and an epoxy group-containing silane and a reaction product of an amino group-containing silane and a (meth)acrylic group-containing silane. One of the above adhesion promoters may be used alone, or two or more thereof may be used as a mixture.

The amount of the silane coupling agent used is preferably from 0.1 to 20 parts by weight and more preferably from 0.5 to 10 parts by weight per 100 parts by weight of the total amount of the (meth)acrylic ester copolymer (A) and the polyoxyalkylene polymer (B).

### <Plasticizer>

A plasticizer can be added to the curable composition according to the present embodiment. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as diisononyl 1,2-cyclohexanedicarboxylate; aliphatic polyfunctional carboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic acid phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxy stearate.

A polymeric plasticizer can also be used. Specific examples of the polymeric plasticizer include: vinyl polymers; polyester plasticizers; polyethers such as polyether polyols (e.g., polyethylene glycol and polypropylene glycol having a number-average molecular weight of 500 or more) and derivatives resulting from conversion of the hydroxy groups of the polyether polyols to ester or ether groups; polystyrenes; polybutadiene; polybutene; polyisobutylene; butadiene-acrylonitrile; and polychloroprene. One plasticizer may be used alone, or two or more plasticizers may be used in combination.

The amount of the plasticizer used is preferably from 5 to 150 parts by weight, more preferably from 10 to 120 parts by weight, and even more preferably from 20 to 100 parts by weight per 100 parts by weight of the total amount of the (meth)acrylic ester copolymer (A) and the polyoxyalkylene polymer (B).

### <Solvent and Diluent>

A solvent or diluent can be added to the curable composition according to the present embodiment. The solvent or diluent used is not limited to a particular compound, and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One of the solvents or diluents as mentioned above may be used alone, or two or more thereof may be used in combination.

### <Anti-Sagging Agent>

The curable composition according to the present embodiment may, if necessary, contain an anti-sagging agent to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the total amount of the (meth)acrylic ester copolymer (A) and the polyoxyalkylene polymer (B).

### <Antioxidant>

The curable composition according to the present embodiment can contain an antioxidant (anti-aging agent). The use of an antioxidant can increase the weathering resistance of the cured product. Examples of the antioxidant include hindered phenol antioxidants, monophenol antioxidants, bisphenol antioxidants, and polyphenol antioxidants. Specific examples of the antioxidant are mentioned in Japanese Laid-Open Patent Application Publication No. H4-283259 and Japanese Laid-Open Patent Application Publication No. H9-194731.

The amount of the antioxidant used is preferably from 0.1 to 10 parts by weight and more preferably from 0.2 to 5 parts by weight per 100 parts by weight of the total amount of the (meth)acrylic ester copolymer (A) and the polyoxyalkylene polymer (B).

### <Light Stabilizer>

The curable composition according to the present embodiment can contain a light stabilizer. The use of a light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and more preferably from 0.2 to 5 parts by weight per 100 parts by weight of the total amount of the (meth)acrylic ester copolymer (A) and the polyoxyalkylene polymer (B).

### <Ultraviolet Absorber>

The curable composition according to the present embodiment can contain an ultraviolet absorber. The use of an ultraviolet absorber can increase the surface weathering resistance of the cured product. Examples of the ultraviolet absorber include benzophenone, benzotriazole, salicylate, substituted acrylonitrile, and metal chelate compounds. Particularly preferred are benzotriazole compounds. Specific examples of the ultraviolet absorber include those sold under the trade names Tinuvin P, Tinuvin 213, Tinuvin 234, Tinuvin 326, Tinuvin 327, Tinuvin 328, Tinuvin 329, and Tinuvin 571 (all of these are manufactured by BASF).

The amount of the ultraviolet absorber used is preferably from 0.1 to 10 parts by weight and more preferably from 0.2 to 5 parts by weight per 100 parts by weight of the total amount of the (meth)acrylic ester copolymer (A) and the polyoxyalkylene polymer (B).

### <Property Modifier>

A property modifier may be added, if necessary, to the curable composition according to the present embodiment for the purpose of modifying the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilane, and *n*-propyltriincthoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition according to the present embodiment or conversely decrease the hardness and increase the elongation at break. One of the property modifiers as mentioned above may be used alone, or two or more thereof may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and more preferably from 0.5 to 5 parts by weight per 100 parts by weight of the total amount of the (meth)acrylic ester copolymer (A) and the polyoxyalkylene polymer (B).

### <Tackifying Resin>

A tackifying resin can be added, if necessary, to the curable composition according to the present embodiment for the purpose of increasing the adhesion or cohesion to a substrate or any other purpose. The tackifying resin used is not limited to a particular resin, and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the total amount of the (meth)acrylic ester copolymer (A) and the polyoxyalkylene polymer (B).

### <Epoxy Group-Containing Compound>

An epoxy group-containing compound can be used in the curable composition according to the present embodiment. The use of an epoxy group-containing compound can improve the recovery performance of the cured product. Examples of the epoxy group-containing compound include epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended to use the epoxy compound in an amount of 0.5 to 50 parts by weight per 100 parts by weight of the total amount of the (meth)acrylic ester copolymer (A) and the polyoxyalkylene polymer (B).

### <Photocurable Material>

A photocurable material can be used in the curable composition according to the present embodiment. The use of a photocurable material can lead to the formation of a coating of the photocurable material on the surface of the cured product, resulting in reduction in stickiness of the cured product or increase in weathering resistance of the cured product. A wide variety of such compounds are known, including organic monomers, oligomers, resins, and compositions containing them. Typical examples of photocurable materials that can be used include: an unsaturated acrylic compound which is a monomer or an oligomer having one or more unsaturated acrylic or methacrylic groups or a mixture of the monomer and oligomer; polyvinyl cinnamates; and azide resins.

The amount of the photocurable material used is preferably from 0.1 to 20 parts by weight and more preferably from 0.5 to 10 parts by weight per 100 parts by weight of the total amount of the (meth)acrylic ester copolymer (A) and the polyoxyalkylene polymer (B).

### <Oxygen-Curable Material>

An oxygen-curable material can be used in the curable composition according to the present embodiment. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

The amount of the oxygen-curable material used is preferably from 0.1 to 20 parts by weight and more preferably from 0.5 to 10 parts by weight per 100 parts by weight of the total amount of the (meth)acrylic ester copolymer (A) and the polyoxyalkylene polymer (B). As taught in Japanese Laid-Open Patent Application Publication No. H3-160053, it is recommended to use the oxygen-curable material in combination with a photocurable material.

### <Epoxy Resin>

An epoxy resin can also be used in the curable composition according to the present embodiment. The composition containing an added epoxy resin is preferred especially for use as an adhesive, in particular an adhesive for exterior wall tiles. Examples of the epoxy resin include bisphenol A epoxy resins and novolac epoxy resins.

As to the ratio between the epoxy resin used and the (meth)acrylic ester copolymer (A) plus the polyoxyalkylene polymer (B), the (meth)acrylic ester copolymer (A) plus polyoxyalkylene polymer (B)/epoxy resin weight ratio is preferably from 100/1 to 1/100. If the (meth)acrylic ester copolymer (A) plus polyoxyalkylene polymer (B)/epoxy resin weight ratio is below 1/100, the enhancing effect on the impact resistance and toughness of the epoxy resin cured product will be diminished. If the (meth)acrylic ester copolymer (A) plus polyoxyalkylene polymer (B)/epoxy resin weight ratio is above 100/1, the strength of the cured product will be insufficient.

When the epoxy resin is added to the curable composition according to the present embodiment, a curing agent for curing the epoxy resin can also be used in the curable composition. The epoxy resin-curing agent used is not limited to a particular material, and may be a commonly used epoxy resin-curing agent.

When a curing agent for curing the epoxy resin is used, the amount of the curing agent is preferably from 0.1 to 300 parts by weight per 100 parts by weight of the epoxy resin.

The curable composition according to the present embodiment is preferably prepared as a one-part composition all the components of which are blended together and hermetically stored and which, when applied to any object, cures under the action of moisture in the air.

In the case where the curable composition is a one-part composition, all the components are blended together beforehand. Thus, it is preferable that a water-containing component be dried to remove water before use or dehydrated by means such as pressure reduction during blending or kneading.

A suitable drying/dehydrating method used when the water-containing component is a solid such as powder is thermal drying, and a suitable drying/dehydrating method used when the water-containing component is a liquid is dehydration under reduced pressure or dehydration using synthetic zeolite, activated alumina, silica gel, quicklime, or magnesium oxide. Alternatively, a small amount of isocyanate compound may be added to react the isocyanate group with water and thus accomplish dehydration. An oxazolidine compound such as 3-ethyl-2-methyl-2-(3-methylbutyl)-1,3-oxazolidine may be added to react the oxazolidine compound with water and thus accomplish dehydration.

The storage stability of the curable composition can be further improved by not only performing the drying/dehydration as described above but also adding a lower alcohol such as methanol or ethanol or an alkoxysilane compound. Examples of the alkoxysilane compound include methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane, and γ-glycidoxypropyltrimethoxysilane.

The amount of the dehydrating agent used, in particular the alkoxysilane compound, is preferably from 0.1 to 20 parts by weight and more preferably from 0.5 to 10 parts by weight per 100 parts by weight of the total amount of the (meth)acrylic ester copolymer (A) and the polyoxyalkylene polymer (B).

The method for preparing the curable composition according to the present embodiment is not limited to a particular technique. For example, a common method can be employed in which the components described above are mixed and the mixture is kneaded using a mixer, a roll mill, or a kneader at ordinary temperature or under heating or in which the components are dissolved and mixed using a small amount of suitable solvent.

The curable composition according to the present embodiment can be used, for example, as a sealing material for buildings, ships, automobiles, or roads, an adhesive, a mold making material, a vibration-isolating material, a vibration-damping material, a soundproofing material, a foam material, a paint, a spray material, or a waterproofing coating material.

A cured product obtained by curing the curable composition according to the present embodiment has high adhesion to various kinds of adherends. As such, the curable composition is more preferably used as a sealing material or an adhesive.

The curable composition according to the present embodiment can be used in diverse applications, including: a material for use in an electrical or electronic part, such as a sealant for the back side of a solar cell; an electrical insulating material such as an insulating sheath material for an electric wire or a cable; an elastic adhesive; a contact adhesive; a spray-type sealing material; a crack-repairing material; an adhesive for tile laying; a powder paint; a cast molding material; a rubber material for medical purposes; a pressure-sensitive adhesive for medical purposes; a medical device sealing material; a food packaging material; a joint sealing material for exterior cladding such as siding board; a coating material; a primer; an electrically conductive material for electromagnetic wave shielding; a thermally conductive material; a hot-melt material; a potting agent for electrical or electronic purposes; a film; a gasket; any kind of molding material; a rust-proofing or waterproofing sealant for an edge face (cut edge) of wire glass or laminated glass; and a liquid sealing material used for various kinds of parts such as automobile parts, electrical parts, and machinery parts.

A cured product of the curable composition according to the present embodiment can, alone or in combination with a primer, adhere to a wide variety of substrates such as glass, porcelain, wood, metal, and a resin molded article. Thus, the curable composition can be used also as a sealing composition or an adhesive composition.

The curable composition according to the present embodiment can be used also as an adhesive for interior panels, an adhesive for exterior panels, an adhesive for tile laying, an adhesive for stone laying, an adhesive for ceiling finishing, an adhesive for floor finishing, an adhesive for wall finishing, an adhesive for vehicle panels, an adhesive for assembly of electrical, electronic, or precision equipment, a sealing material for direct glazing, a sealing material for double-glazed glass, a sealing material for SSG, or a sealing material for working joints of buildings.

### Examples

Hereinafter, the present invention will be described in more detail using examples. The examples given below are not intended to limit the present invention.

### (Number-Average Molecular Weight and Weight-Average Molecular Weight)

The number-average and weight-average molecular weights mentioned in the examples are GPC molecular weights measured under the following conditions.
Delivery system: HLC-8220 GPC manufactured by Tosoh Corporation
Column: TSK-GEL H type manufactured by Tosoh Corporation
Solvent: THF
Molecular weight: Polystyrene equivalent
Measurement temperature: 40°C

### (Sulfur Atom Concentration)

Each of the values of the sulfur atom concentration is a theoretical value calculated from the total amount of the monomer component used to produce the (meth)acrylic ester copolymer (A) and the amount of the chain transfer agent (a3) having a mercapto group.

### (Synthesis Example 1)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 28,500 (terminal group equivalent molecular weight of 17,700) and a dispersity Mw/Mn of 1.21. Sodium methoxide dissolved in methanol at a concentration of 28% was added in an amount of 1.0 molar equivalents per molar equivalent of the hydroxy groups of the hydroxy-terminated polyoxypropylene. After methanol was distilled off by evaporation under vacuum, 1.0 molar equivalents of allyl glycidyl ether was added per molar equivalent of the hydroxy groups of the hydroxy-terminated polyoxypropylene, and the reaction was allowed to proceed at 130°C for 2 hours. Subsequently, 0.28 molar equivalents of sodium methoxide dissolved in methanol was added, then methanol was removed, and 1.79 molar equivalents of allyl chloride was further added to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, polyoxypropylene having a terminal structure having two or more unsaturated carbon-carbon bonds was obtained. For this polymer, it was found that 2.0 unsaturated carbon-carbon bonds were introduced on average per terminal moiety.

To 100 parts by weight of the polyoxypropylene having 2.0 unsaturated carbon-carbon bonds on average per terminal moiety was added 36 ppm of a platinum-divinyldisiloxane complex (isopropanol solution with a concentration of 3 wt% calculated as the platinum content), and 2.2 parts by weight of trimethoxysilane was slowly added dropwise under stirring. The liquid mixture was reacted at 90°C for 2 hours, after which trimethoxysilane remaining unreacted was distilled off under reduced pressure to give a reactive silicon group-containing linear polyoxypropylene polymer (B-1) having 1.6 trimethoxysilyl groups on average per terminal moiety, 3.2 silicon groups on average per molecule, and a number-average molecular weight of 28,500.

### (Synthesis Example 2)

Propylene oxide was polymerized using polyoxypropylene triol having a number-average molecular weight of about 3,000 as an initiator in the presence of a zinc hexacyanocobaltate-glyme complex catalyst. This polymerization yielded polyoxypropylene terminated at both ends by hydroxy groups and having a number-average molecular weight of 26,200 (terminal group equivalent molecular weight of 17,440) and a dispersity Mw/Mn of 1.21. Sodium methoxide dissolved in methanol at a concentration of 28% was added in an amount of 1.0 molar equivalents per molar equivalent of the hydroxy groups of the hydroxy-terminated polyoxypropylene. After methanol was distilled off by evaporation under vacuum, 1.0 molar equivalents of allyl glycidyl ether was added per molar equivalent of the hydroxy groups of the hydroxy-terminated polyoxypropylene, and the reaction was allowed to proceed at 130°C for 2 hours. Subsequently, 0.28 molar equivalents of sodium methoxide dissolved in methanol was added, then methanol was removed, and 1 .79 molar equivalents of allyl chloride was further added to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, polyoxypropylene having a terminal structure having two or more unsaturated carbon-carbon bonds was obtained. For this polymer, it was found that 2.0 unsaturated carbon-carbon bonds were introduced on average per terminal moiety.

To 1 00 parts by weight of the polyoxypropylene having 2.0 unsaturated carbon-carbon bonds on average per terminal moiety was added 72 ppm of a platinum-divinyldisiloxane complex (isopropanol solution with a concentration of 3 wt% calculated as the platinum content), and 2.5 parts by weight of trimethoxysilane was slowly added dropwise under stirring. The liquid mixture was reacted at 90°C for 2 hours, after which trimethoxysilane remaining unreacted was distilled off under reduced pressure to give a reactive silicon group-containing branched polyoxypropylene polymer (B-2) having 1.5 trimethoxysilyl groups on average per terminal moiety, 4.5 silicon groups on average per molecule, and a number-average molecular weight of 26,200.

### (Synthesis Example 3)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 14,600 (terminal group equivalent molecular weight of 9,130) and a dispersity Mw/Mn of 1.16. Sodium methoxide dissolved in methanol at a concentration of 28% was added in an amount of 1.0 molar equivalents per molar equivalent of the hydroxy groups of the hydroxy-terminated polyoxypropylene. After methanol was distilled off by evaporation under vacuum, 1.0 molar equivalents of allyl glycidyl ether was added per molar equivalent of the hydroxy groups of the hydroxy-terminated polyoxypropylene, and the reaction was allowed to proceed at 130°C for 2 hours. Subsequently, 0.28 molar equivalents of sodium methoxide dissolved in methanol was added, then methanol was removed, and 1.79 molar equivalents of allyl chloride was further added to convert the terminal hydroxy groups to allyl groups. To 100 parts by weight of the unpurified, ally-terminated polyoxypropylene were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, polyoxypropylene having a terminal structure having two or more unsaturated carbon-carbon bonds was obtained. For this polymer, it was found that 2.0 unsaturated carbon-carbon bonds were introduced on average per terminal moiety.

To 100 parts by weight of the polyoxypropylene having 2.0 unsaturated carbon-carbon bonds on average per terminal moiety was added 36 ppm of a platinum-divinyldisiloxane complex (isopropanol solution with a concentration of 3 wt% calculated as the platinum content), and 3.2 parts by weight of dimethoxymethylsilane was slowly added dropwise under stirring. The liquid mixture was reacted at 90°C for 2 hours, after which dimethoxymethylsilane remaining unreacted was distilled off under reduced pressure to give a reactive silicon group-containing linear polyoxypropylene polymer (B-3) having 1.5 dimethoxymethylsilyl groups on average per terminal moiety, 3.0 silicon groups on average per molecule, and a number-average molecular weight of 14,600.

### (Synthesis Example 4)

Propylene oxide was polymerized using polyoxypropylene glycol having a number-average molecular weight of about 2,000 as an initiator in the presence of a zinc hexacyanocobaltate-glyme complex catalyst. This polymerization yielded polyoxypropylene terminated at both ends by hydroxy groups and having a number-average molecular weight of 14,600 (terminal group equivalent molecular weight of 9,1 30) and a dispersity Mw/Mn of 1.16. To the polyoxypropylene was added 60 ppm of U-360 (dibutyltin bis(isooctyl mercaptopropionate), Nitto Kasei Co., Ltd.), and the mixture was heated to 90°C. One equivalent of A-LINK 35 (3-isocyanatopropyltrimethoxysilane, Momentive Performance Materials) was added dropwise per equivalent of the hydroxy groups of the polyoxypropylene. The reaction was allowed to proceed at 90°C four 1 hour, thus giving a reactive silicon group-containing linear polyoxypropylene polymer (B-4) terminated at both ends by trimethoxysilyl groups and having 2.0 silicon groups per molecule and a number-average molecular weight of 14,600.

### (Synthesis Example 5)

Propylene oxide was polymerized using butanol as an initiator in the presence of a zinc hexacyanocobaltate-glyme complex catalyst. This polymerization yielded polyoxypropylene oxide having a number-average molecular weight of 7,750 (terminal group equivalent molecular weight of 5,000). Subsequently, 1.2 equivalents of NaOMe dissolved in methanol was added per equivalent of the hydroxy groups of the hydroxy-terminated polyoxypropylene oxide, methanol was then distilled off, and 3-chloro-1-propene was further added to convert the terminal hydroxy groups to allyl groups. To 100 parts by mass of the allyl-terminated polyoxypropylene polymer was then added 36 ppm of a platinum-divinyldisiloxane complex (isopropanol solution with a concentration of 3 mass% calculated as the platinum content), and 1.72 parts by mass of dimethoxymethylsilane was slowly added dropwise under stirring. The liquid mixture was reacted at 90°C for 2 hours to give a reactive silicon group-containing linear polyoxypropylene polymer (B-5) terminated by dimethoxymethylsilyl groups and having 0.7 silicon groups on average per molecule and a number-average molecular weight of 7,750.

### (Synthesis Example 6)

To polyoxypropylene glycol having a number-average molecular weight of about 4,020 (terminal group equivalent molecular weight of 2,980) was added 60 ppm of U-360 (dibutyltin bis(isooctyl mercaptopropionate), Nitto Kasei Co., Ltd.), and 0.93 equivalents of Karenz AOI (2-isocyanatoethyl acrylate, Showa Denko K.K.) was added dropwise per equivalent of the hydroxy groups of the polyoxypropylene glycol. The reaction was allowed to proceed in a nitrogen atmosphere containing 5.5% oxygen at 80°C for 1 hour, thus giving a polyoxyalkylene polymer (a2-1) terminated at both ends by acryloyl groups (having about two acryloyl groups per polymer molecule) and having a number-average molecular weight of 4,020 and a weight-average molecular weight of 4,860.

### (Synthesis Example 7)

Propylene oxide was polymerized using polyoxypropylene glycol having a number-average molecular weight of about 4,020 (terminal group equivalent molecular weight of 2,980) as an initiator in the presence of a zinc hexacyanocobaltate-glyme complex catalyst. This polymerization yielded polyoxypropylene terminated at both ends by hydroxy groups and having a number-average molecular weight of 28,340 (terminal group equivalent molecular weight of 1 7,700) and a dispersity Mw/Mn of 1.24. To the polyoxypropylene was added 60 ppm of U-360, and 0.93 equivalents of Karenz AOI was added dropwise per equivalent of the hydroxy groups of the polyoxypropylene. The reaction was allowed to proceed in a nitrogen atmosphere containing 5.5% oxygen at 80°C for 1 hour, thus giving a polyoxyalkylene polymer (a2-3) terminated at both ends by acryloyl groups (having about two acryloyl groups per polymer molecule) and having a number-average molecular weight of 28,340 and a weight-average molecular weight of 35,170.

### (Synthesis Example 8)

Propylene oxide was polymerized using polyoxypropylene glycol having a number-average molecular weight of about 4,020 (terminal group equivalent molecular weight of 2,980) as an initiator in the presence of a zinc hexacyanocobaltate-glyme complex catalyst. This polymerization yielded polyoxypropylene terminated at both ends by hydroxy groups and having a number-average molecular weight of 21,100 (terminal group equivalent molecular weight of 13,600) and a dispersity Mw/Mn of 1.21. To the polyoxypropylene was added 60 ppm of U-360, and 0.93 equivalents of Karenz AOI was added dropwise per equivalent of the hydroxy groups of the polyoxypropylene. The reaction was allowed to proceed in a nitrogen atmosphere containing 5.5% oxygen at 80°C for 1 hour, thus giving a polyoxyalkylene polymer (a2-4) terminated at both ends by acryloyl groups (having about two acryloyl groups per polymer molecule) and having a number-average molecular weight of 21,100 and a weight-average molecular weight of 24,930.

### (Synthesis Example 9)

A four-necked flask equipped with a stirrer was charged with 58.4 parts by weight of isobutanol, which was heated to 105°C under nitrogen atmosphere. To the heated isobutanol was added dropwise over 5 hours a liquid mixture prepared by dissolving 39.0 parts by weight of methyl methacrylate, 0.2 parts by weight of butyl acrylate, 0.2 parts by weight of 2-ethylhexyl acrylate, 9.9 parts by weight of stearyl methacrylate, 36.7 parts by weight of the polyfunctional macromonomer (a2-1) prepared in Synthesis Example 6, 8.1 parts by weight of 3-methacryloxypropyltrimethoxysilane, 5.9 parts by weight of 3-mercaptopropyltrimethoxysilane, and 1.8 parts by weight of 2,2'-azobis(2-methylbutyronitrile) in 16.4 parts by weight of isobutanol. A liquid mixture prepared by dissolving 0.7 parts by weight of 2,2'-azobis(2-methylbutyronitrile) in 6.3 parts by weight of isobutanol was further added, and the polymerization was allowed to proceed at 105°C for 2 hours to give an isobutanol solution (solid content = 60%) of a reactive silicon group-containing (meth)acrylic ester copolymer (A-1) having a number-average molecular weight of 2,820 (GPC molecular weight). For the solids in the solution, the polyfunctional macromonomer amount was 0.091 mmol/g, the reactive silicon group amount was 0.63 mmol/g, and the sulfur atom concentration was 9,640 ppm.

### (Synthesis Example 10)

A four-necked flask equipped with a stirrer was charged with 48.0 parts by weight of isobutanol, which was heated to 105°C under nitrogen atmosphere. To the heated isobutanol was added dropwise over 5 hours a liquid mixture prepared by dissolving 46.7 parts by weight of methyl methacrylate, 18.7 parts by weight of butyl acrylate, 9.3 parts by weight of stearyl methacrylate, 9.3 parts by weight of a polyfunctional macromonomer (a2-2) (trade name APG-700, manufactured by Shin-Nakamura Chemical Co., Ltd.), 9.3 parts by weight of 3-methacryloxypropyltrimethoxysilane, 6.7 parts by weight of 3-mercaptopropyltrimethoxysilane, and 1.8 parts by weight of 2,2'-azobis(2-methylbutyronitrile) in 16.4 parts by weight of isobutanol. A liquid mixture prepared by dissolving 0.7 parts by weight of 2,2'-azobis(2-methylbutyronitrile) in 6.3 parts by weight of isobutanol was further added, and the polymerization was allowed to proceed at 105°C for 2 hours to give an isobutanol solution (solid content = 60%) of a reactive silicon group-containing (meth)acrylic ester copolymer (A-2) having a number-average molecular weight of 2,770 (GPC molecular weight). For the solids in the solution, the polyfunctional macromonomer amount was 0.13 mmol/g, the reactive silicon group amount was 0.72 mmol/g, and the sulfur atom concentration was 10,940 ppm.

### (Synthesis Example 11)

A four-necked flask equipped with a stirrer was charged with 48.0 parts by weight of isobutanol, which was heated to 105°C under nitrogen atmosphere. To the heated isobutanol was added dropwise over 5 hours a liquid mixture prepared by dissolving 46.7 parts by weight of methyl methacrylate, 11.2 parts by weight of butyl acrylate, 12.1 parts by weight of stearyl methacrylate, 14.0 parts by weight of the polyfunctional macromonomer (a2-2) (trade name APG-700, manufactured by Shin-Nakamura Chemical Co., Ltd.), 9.3 parts by weight of 3-methacryloxypropyltrimethoxysilane, 6.7 parts by weight of 3-mercaptopropyltrimethoxysilane, and 1.8 parts by weight of 2,2'-azobis(2-methylbutyronitrile) in 16.4 parts by weight of isobutanol. A liquid mixture prepared by dissolving 0.7 parts by weight of 2,2'-azobis(2-methylbutyronitrile) in 6.3 parts by weight of isobutanol was further added, and the polymerization was allowed to proceed at 105°C for 2 hours to give an isobutanol solution (solid content = 60%) of a reactive silicon group-containing (meth)acrylic ester copolymer (A-3) having a number-average molecular weight of 2,790 (GPC molecular weight). For the solids in the solution, the polyfunctional macromonomer amount was 0.20 mmol/g, the reactive silicon group amount was 0.72 mmol/g, and the sulfur atom concentration was 10,941 ppm.

### (Synthesis Example 12)

A four-necked flask equipped with a stirrer was charged with 45.5 parts by weight of isobutanol, which was heated to 105°C under nitrogen atmosphere. To the heated isobutanol was added dropwise over 5 hours a liquid mixture prepared by dissolving 49.0 parts by weight of methyl methacrylate, 1.0 parts by weight of butyl acrylate, 0.5 parts by weight of 2-ethylhexyl acrylate, 6.0 parts by weight of stearyl methacrylate, 36.0 parts by weight of the polyfunctional macromonomer (a2-4) prepared in Synthesis Example 8, 0.5 parts by weight of 3-methacryloxypropyltrimethoxysilane, 7.0 parts by weight of 3-mercaptopropyltrimethoxysilane, and 0.5 parts by weight of 2,2'-azobis(2-methylbutyronitrile) in 12.0 parts by weight of isobutanol. A liquid mixture prepared by dissolving 0.3 parts by weight of 2,2'-azobis(2-methylbutyronitrile) in 7.2 parts by weight of isobutanol was further added, and the polymerization was allowed to proceed at 105°C for 2 hours to give an isobutanol solution (solid content = 60%) of a reactive silicon group-containing (meth)acrylic ester copolymer (A-4) having a number-average molecular weight of 2,130 (GPC molecular weight). For the solids in the solution, the polyfunctional macromonomer amount was 0.017 mmol/g, the reactive silicon group amount was 0.36 mmol/g, and the sulfur atom concentration was 11,410 ppm.

### (Synthesis Example 13)

A four-necked flask equipped with a stirrer was charged with 40.6 parts by weight of isobutanol, which was heated to 105°C under nitrogen atmosphere. To the heated isobutanol was added dropwise over 5 hours a liquid mixture prepared by dissolving 37.8 parts by weight of methyl methacrylate, 0.5 parts by weight of butyl acrylate, 0.5 parts by weight of 2-ethylhexyl acrylate, 10.3 parts by weight of stearyl methacrylate, 36.5 parts by weight of the polyfunctional macromonomer (a2-3) prepared in Synthesis Example 7, 8.5 parts by weight of 3-methacryloxypropyltrimethoxysilane, 5.9 parts by weight of 3-mercaptopropyltrimethoxysilane, and 1.3 parts by weight of 2,2'-azobis(2-methylbutyronitrile) in 20.4 parts by weight of isobutanol. A liquid mixture prepared by dissolving 0.3 parts by weight of 2,2'-azobis(2-methylbutyronitrile) in 5.1 parts by weight of isobutanol was further added, and the polymerization was allowed to proceed at 105°C for 2 hours to give an isobutanol solution (solid content = 60%) of a reactive silicon group-containing (meth)acrylic ester copolymer (A-5) having a number-average molecular weight of 2,370 (GPC molecular weight). For the solids in the solution, the polyfunctional macromonomer amount was 0.013 mmol/g, the reactive silicon group amount was 0.64 mmol/g, and the sulfur atom concentration was 9,618 ppm.

### (Synthesis Example 14)

A four-necked flask equipped with a stirrer was charged with 39.8 parts by weight of isobutanol, which was heated to 105°C under nitrogen atmosphere. To the heated isobutanol was added dropwise over 5 hours a liquid mixture prepared by dissolving 50.0 parts by weight of methyl methacrylate, 1.0 parts by weight of butyl acrylate, 4.0 parts by weight of stearyl methacrylate, 36.0 parts by weight of the polyfunctional macromonomer (a2-4) prepared in Synthesis Example 8, 2.0 parts by weight of 3-methacryloxypropyldimethoxymethylsilane, 7.0 parts by weight of 3-mercaptopropyldimethoxymethylsilane, and 1.3 parts by weight of 2,2'-azobis(2-methylbutyronitrile) in 20.7 parts by weight of isobutanol. A liquid mixture prepared by dissolving 0.3 parts by weight of 2,2'-azobis(2-methylbutyronitrile) in 4.9 parts by weight of isobutanol was further added, and the polymerization was allowed to proceed at 105°C for 2 hours to give an isobutanol solution (solid content = 60%) of a reactive silicon group-containing (meth)acrylic ester copolymer (A-6) having a number-average molecular weight of 1,820 (GPC molecular weight). For the solids in the solution, the polyfunctional macromonomer amount was 0.017 mmol/g, the reactive silicon group amount was 0.47 mmol/g, and the sulfur atom concentration was 12,424 ppm.

### (Synthesis Example 15)

A four-necked flask equipped with a stirrer was charged with 48.0 parts by weight of isobutanol, which was heated to 105°C under nitrogen atmosphere. To the heated isobutanol was added dropwise over 5 hours a liquid mixture prepared by dissolving 46.7 parts by weight of methyl methacrylate, 28.0 parts by weight of butyl acrylate, 9.3 parts by weight of stearyl methacrylate, 9.3 parts by weight of 3-methacryloxypropyltrimethoxysilane, 6.7 parts by weight of 3-mercaptopropyltrimethoxysilane, and 1.8 parts by weight of 2,2'-azobis(2-methylbutyronitrile) in 16.4 parts by weight of isobutanol. A liquid mixture prepared by dissolving 0.7 parts by weight of 2,2'-azobis(2-methylbutyronitrile) in 6.3 parts by weight of isobutanol was further added, and the polymerization was allowed to proceed at 105°C for 2 hours to give an isobutanol solution (solid content = 60%) of a reactive silicon group-containing (meth)acrylic ester copolymer (P-1) having a number-average molecular weight of 2,230 (GPC molecular weight). For the solids in the solution, the reactive silicon group amount was 0.72 mmol/g, and the sulfur atom concentration was 10,941 ppm.

### (Synthesis Example 16)

A four-necked flask equipped with a stirrer was charged with 46.9 parts by weight of isobutanol, which was heated to 105°C under nitrogen atmosphere. To the heated isobutanol was added dropwise over 5 hours a liquid mixture prepared by dissolving 49.1 parts by weight of methyl methacrylate, 29.5 parts by weight of butyl acrylate, 9.8 parts by weight of stearyl methacrylate, 9.8 parts by weight of 3-methacryloxypropyltrimethoxysilane, 1.8 parts by weight of 3-mercaptopropyltrimethoxysilane, and 1.8 parts by weight of 2,2'-azobis(2-methylbutyronitrile) in 16.4 parts by weight of isobutanol. A liquid mixture prepared by dissolving 0.7 parts by weight of 2,2'-azobis(2-methylbutyronitrile) in 6.3 parts by weight of isobutanol was further added, and the polymerization was allowed to proceed at 105°C for 2 hours to give an isobutanol solution (solid content = 60%) of a reactive silicon group-containing (meth)acrylic ester copolymer (P-2) having a number-average molecular weight of 4,100 (GPC molecular weight). For the solids in the solution, the reactive silicon group amount was 0.49 mmol/g, and the sulfur atom concentration was 2,939 ppm.

### (Synthesis Example 17)

A four-necked flask equipped with a stirrer was charged with 46.9 parts by weight of isobutanol, which was heated to 105°C under nitrogen atmosphere. To the heated isobutanol was added dropwise over 5 hours a liquid mixture prepared by dissolving 55.0 parts by weight of methyl methacrylate, 31.0 parts by weight of butyl acrylate, 0.5 parts by weight of 2-ethylhexyl acrylate, 6.0 parts by weight of stearyl methacrylate, 0.5 parts by weight of 3-methacryloxypropyltrimethoxysilane, 7.0 parts by weight of 3-mercaptopropyltrimethoxysilane, and 1.8 parts by weight of 2,2'-azobis(2-methylbutyronitrile) in 16.4 parts by weight of isobutanol. A liquid mixture prepared by dissolving 0.7 parts by weight of 2,2'-azobis(2-methylbutyronitrile) in 6.3 parts by weight of isobutanol was further added, and the polymerization was allowed to proceed at 105°C for 2 hours to give an isobutanol solution (solid content = 60%) of a reactive silicon group-containing (meth)acrylic ester copolymer (P-3) having a number-average molecular weight of 2,200 (GPC molecular weight). For the solids in the solution, the reactive silicon group amount was 0.36 mmol/g, and the sulfur atom concentration was 11,410 ppm.

The polyoxypropylene polymer (B-1) obtained in Synthesis Example 1 was mixed with each of those isobutanol solutions of the (meth)acrylic ester copolymers (A-1) to (A-6) and (P-1) to (P-3) which were obtained in Synthesis Examples 9 to 17 in such proportions that the amount of the polyoxypropylene polymer (B-1) was 60 parts by weight and the amount of the solids in the isobutanol solution was 40 parts by weight. After that, isobutanol was removed by thermal evaporation, and the viscosity of each of the mixtures was measured by the method described below. The results obtained are shown in Table 1.

### (Viscosity)

A cone plate (2°) with a diameter of 25 mm was used as a jig, and the gap was set to 60 µm. The viscosity of each mixture was measured at a rotational speed of 0.1 sec⁻¹. The device used was a rheometer manufactured by TA instruments (ARES-G2). The results obtained are shown in Table 1.

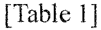

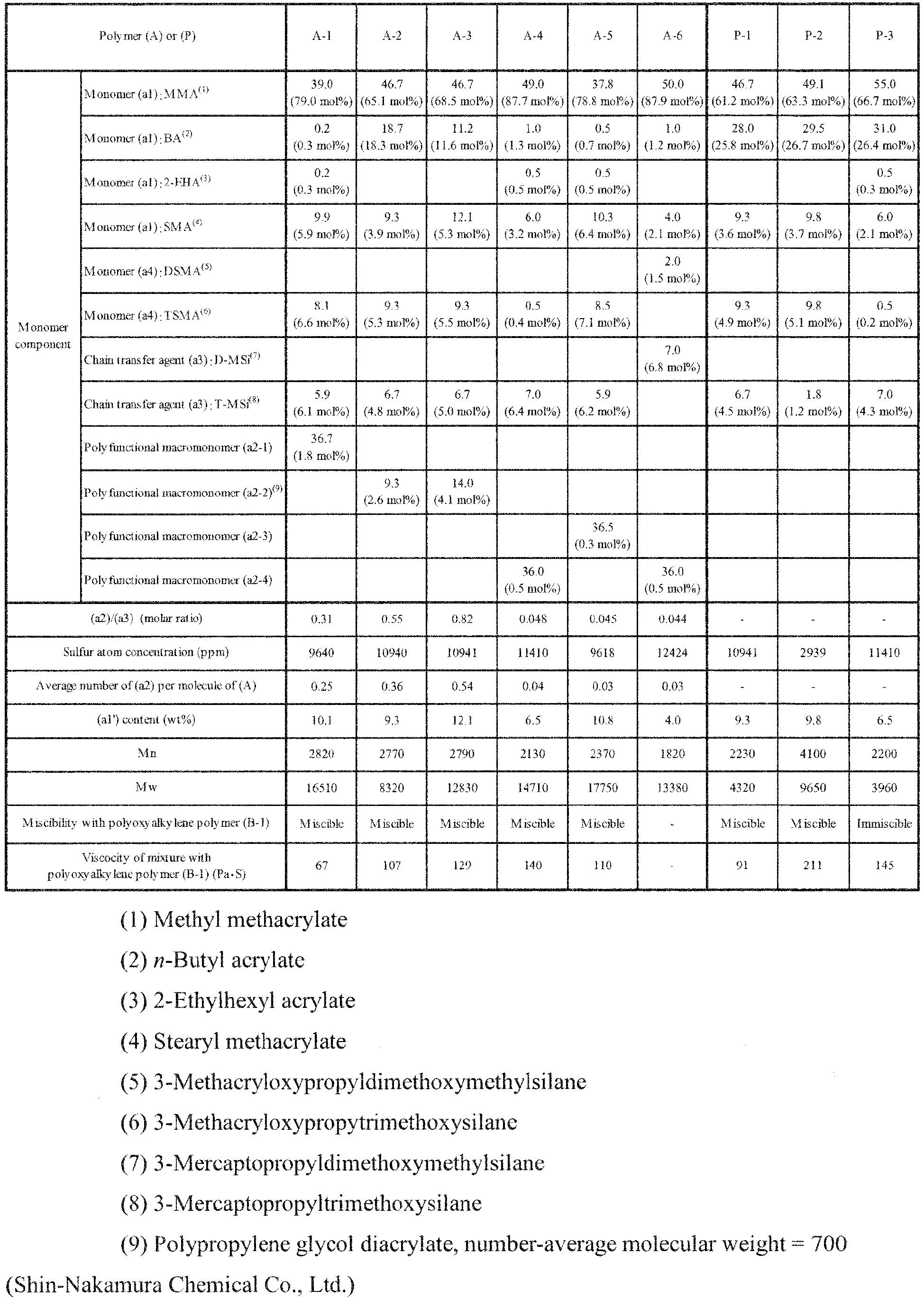

As seen from Table 1, the viscosity relative to the weight-average molecular weight (Mw) was lower for the mixtures containing the (meth)acrylic ester copolymer (A) and the polyoxyalkylene polymer (B) than for the mixtures containing the (meth)acrylic ester copolymer (P) instead of the (meth)acrylic ester copolymer (A).

Each mixture containing a corresponding one of the (meth)acrylic ester copolymers (A-1) to (A-5) exhibited a clearly lower viscosity than the mixture containing the (meth)acrylic ester copolymer (P-2) formed without the use of the polyfunctional macromonomer (a2), despite the fact that the weight-average molecular weight of each mixture containing a corresponding one of the (meth)acrylic ester copolymers (A-1) to (A-5) was similar to or higher than that of the mixture containing the (meth)acrylic ester copolymer (P-2).

It is also seen that the (meth)acrylic ester copolymer (P-3), which was formed without the use of the polyfunctional macromonomer (a2) and for which the amount of the monomer (a1') was not more than 9 wt%, was not miscible with the polyoxyalkylene polymer (B-1) and that the (meth)acrylic ester copolymer (A-4) was miscible with the polyoxyalkylene polymer (B-1) despite the amount of the monomer (a1') being not more than 9 wt%.

### (Example 1)

The reactive silicon group-containing polyoxypropylene polymer (B-1) obtained in Synthesis Example 1 was mixed with that isobutanol solution of the (meth)acrylic ester copolymer (A-1) which was obtained in Synthesis Example 9 in such proportions that the amount of the polyoxypropylene polymer (B-1) was 60 parts by weight and the amount of the solids in the isobutanol solution was 40 parts by weight. After the mixing, isobutanol was removed by thermal evaporation. The resulting mixture was further mixed, using a planetary mixer, with 40 parts by weight of NANOX #30 serving as a filler (ground calcium carbonate, manufactured by Maruo Calcium Co., Ltd.), 30 parts by weight of CCR-S10 serving as a filler (synthetic calcium carbonate, manufactured by Shiraishi Calcium Kaisha, Ltd.), 20 parts by weight of ACTCOL P-23 serving as a plasticizer (polypropylene glycol, manufactured by Mitsui Chemicals, Inc.), 2.5 parts by weight of DISPARLON 6500 serving as a thixotropy-imparting agent (fatty acid amide wax, manufactured by Kusumoto Chemicals, Ltd.), 1 part by weight of NOCRAC CD serving as an antioxidant (4,4'-bis(α,α-dimethylbenzyl)diphenylamine, manufactured by Ouchi Shinko Chemical Industrial Co., Ltd.), and 1 part by weight ofADK STAB AO-60 serving as an antioxidant (pentaerythritol tetrakis[3-(3,5-di-*tert*-butyl-4-hydroxyphenyl)propionate, manufactured by Adeka Corporation). The resulting mixture was dehydrated by heating it at 120°C under reduced pressure for 1 hour. The resulting composition was cooled and mixed with 3 parts by weight of A-171 serving as a dehydrating agent (vinyltrimethoxysilane, manufactured by Momentive Performance Materials), 3 parts by weight of KBM-603 serving as an adhesion promoter (*N*-(2-aminoethyl)-3-aminopropyltrimethoxysilane, manufactured by Shin-Etsu Chemical Co., Ltd.), and 0.3 parts by weight of NEOSTANN U-810 serving as a curing catalyst (dioctyltin dilaurate, manufactured by Nitto Kasei Co., Ltd.). Thus, a one-part curable composition was obtained.

### (Depth Curability)

A 10-mm-diameter tube made of polyethylene was filled with the one-part curable composition obtained as above, and the composition was aged at 23°C and 50% RH. After 1 and 7 days of aging, a gelled portion of the composition was collected by means of a spatula, and the thickness of the gelled portion was measured. The results are shown in Table 2.

### (Tensile Properties)

The one-part curable composition obtained as above was used to make a sheet with a thickness of about 2 mm. The sheet was cured and aged at 23°C and 50% RH for 3 days and then at 50°C for 4 days. The resulting sheet was punched to give a No. 3 dumbbell-shaped specimen (JIS K 6251), which was subjected to tensile strength testing at 23°C and 50% RH to measure modulus at 50% elongation (M50), tensile strength at break (TB), and elongation at break (%). The measurement of the tensile properties was carried out using Autograph (AGS-X) manufactured by Shimadzu Corporation at a tensile speed of 200 mm/min. The results are shown in Table 2.

### (Example 2)

A one-part curable composition was obtained and evaluated in the same manner as in Example 1, except that the isobutanol solution of the (meth)acrylic ester copolymer (A-3) which was obtained in Synthesis Example 11 was used instead of the isobutanol solution of the (meth)acrylic ester copolymer (A-1) which was obtained in Synthesis Example 9. The results are shown in Table 2.

### (Example 3)

A one-part curable composition was obtained and evaluated in the same manner as in Example 1, except that the isobutanol solution of the (meth)acrylic ester copolymer (A-5) which was obtained in Synthesis Example 13 was used instead of the isobutanol solution of the (meth)acrylic ester copolymer (A-1) which was obtained in Synthesis Example 9. The results are shown in Table 2.

### (Example 4)

A one-part curable composition was obtained and evaluated in the same manner as in Example 1, except that: the isobutanol solution of the (meth)acrylic ester copolymer (A-5) which was obtained in Synthesis Example 13 was used instead of the isobutanol solution of the (meth)acrylic ester copolymer (A-1) which was obtained in Synthesis Example 9; the reactive silicon group-containing polyoxypropylene polymer (B-2) obtained in Synthesis Example 2 was used instead of the reactive silicon group-containing polyoxypropylene polymer (B-1) obtained in Synthesis Example 1; and 0.8 parts by weight of DBU (1,8-diazabicyclo[5,4,0]undec-7-ene, San-Apro Ltd.) was used as a curing catalyst. The results are shown in Table 2.

### (Example 5)

A one-part curable composition was obtained and evaluated in the same manner as in Example 1, except that: the isobutanol solution of the (meth)acrylic ester copolymer (A-5) which was obtained in Synthesis Example 13 was used instead of the isobutanol solution of the (meth)acrylic ester copolymer (A-1) which was obtained in Synthesis Example 9; and the reactive silicon group-containing polyoxypropylene polymer (B-4) obtained in Synthesis Example 4 was used instead of the reactive silicon group-containing polyoxypropylene polymer (B-1) obtained in Synthesis Example 1. The results are shown in Table 2.

### (Comparative Example 1)

A one-part curable composition was obtained and evaluated in the same manner as in Example 1, except that the isobutanol solution of the (meth)acrylic ester copolymer (P-1) which was obtained in Synthesis Example 15 was used instead of the isobutanol solution of the (meth)acrylic ester copolymer (A-1) which was obtained in Synthesis Example 9. The results are shown in Table 2.

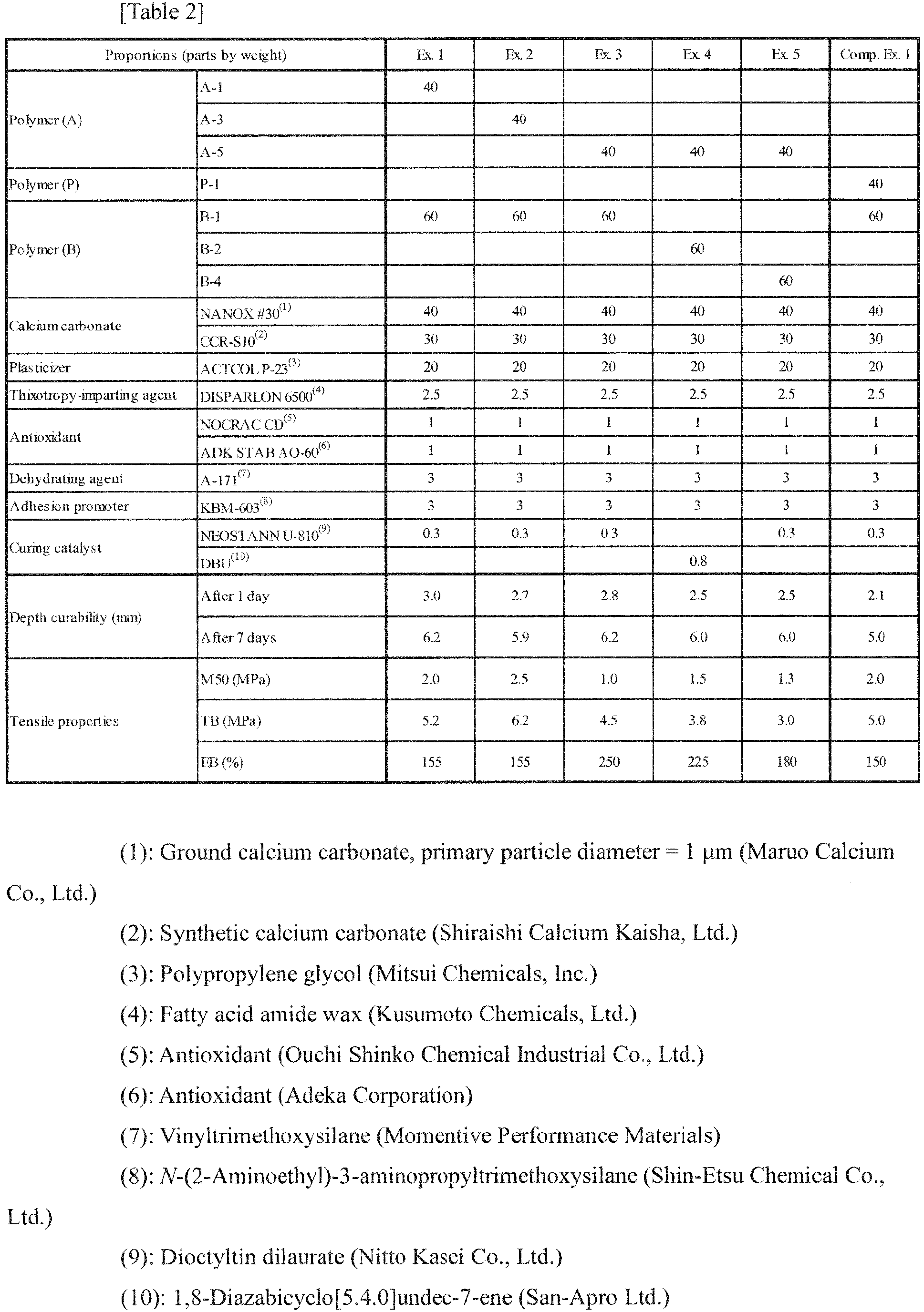

In Examples 1 to 5, as seen from Table 2, the thickness of the gelled portion was greater than in Comparative Example 1, both after 1 and 7 days of aging. This demonstrates that the depth curability was better in Examples 1 to 5 than in Comparative Example 1. It is also seen that in Examples 1 and 2, not only is the depth curability better than in Comparative Example 1, but cured products were obtained which exhibited higher tensile strength and higher elongation at break than the cured product of Comparative Example 1. It is also seen that in Examples 3 to 5, where the (meth)acrylic ester copolymer (A-5) was used which was produced using the polyfunctional macromonomer (a2) having a number-average molecular weight of not less than 20,000, the elongation at break was significantly higher than in Comparative Example 1.

### (Example 6)

A one-part curable composition was obtained and evaluated in the same manner as in Example 1, except that: the isobutanol solution of the (meth)acrylic ester copolymer (A-6) which was obtained in Synthesis Example 14 was used instead of the isobutanol solution of the (meth)acrylic ester copolymer (A-1) which was obtained in Synthesis Example 9; the reactive silicon group-containing polyoxypropylene polymer (B-3) obtained in Synthesis Example 3 was used instead of the reactive silicon group-containing polyoxypropylene polymer (B-1) obtained in Synthesis Example 1; 20 parts by weight of the reactive silicon group-containing polyoxypropylene polymer (B-5) obtained in Synthesis Example 5 was added; the plasticizer, ACTCOL P-23, was not added; and 1.5 parts by weight of NEOSTANN S-1 (a reaction product of dioctyltin oxide and a silicate compound, Nitto Kasei Co., Ltd.) was used as a curing catalyst. The results are shown in Table 3.

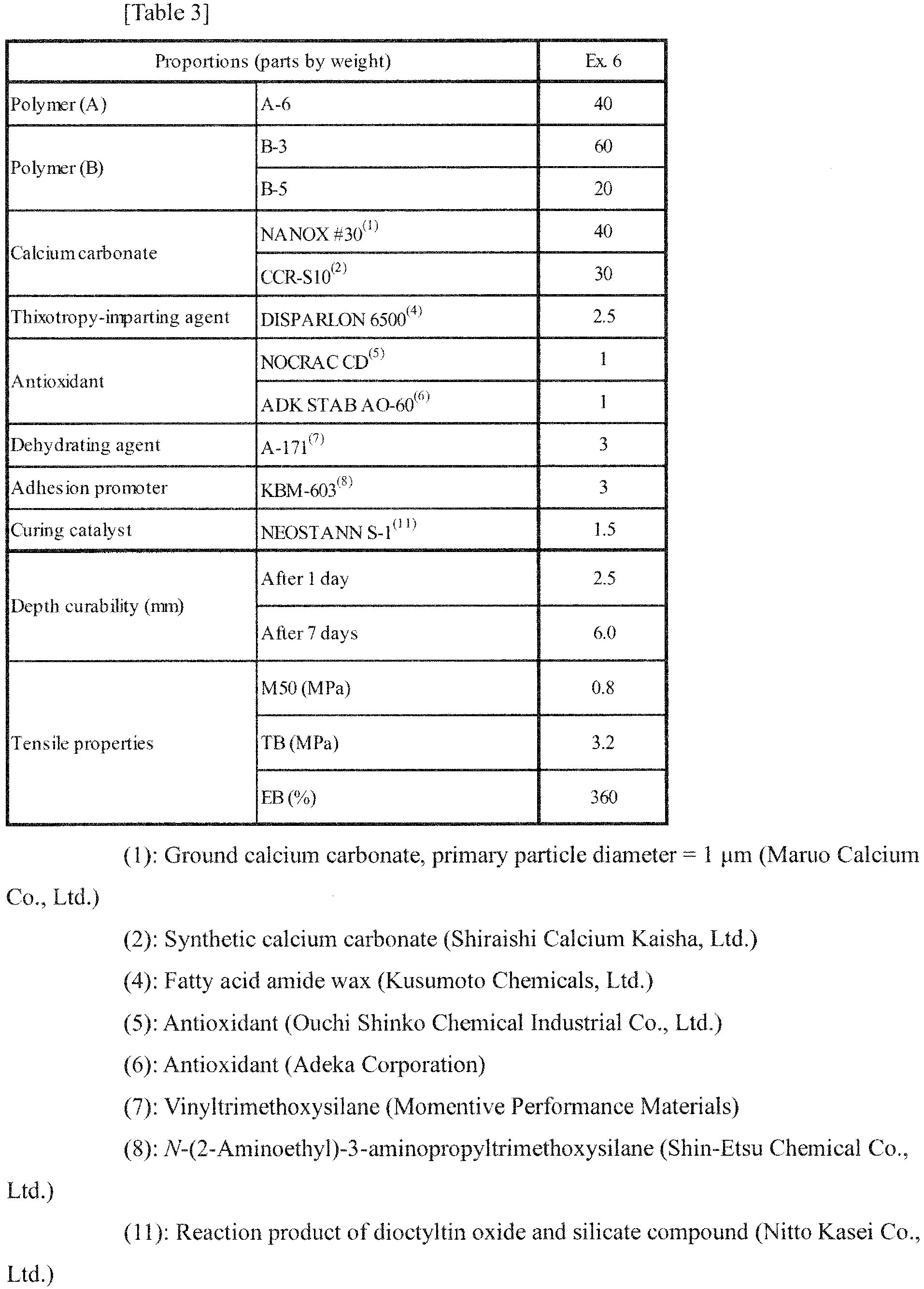

In Example 6, as seen from Table 3, the depth curability was good, and a cured product was obtained which exhibited good tensile properties, in particular high tensile strength at break and high elongation at break.

## Claims

1. A curable composition comprising:
a (meth)acrylic ester copolymer (A) having a reactive silicon group represented by the following formula (1): -SiR¹_{c}X_{3-c} (1), wherein R¹ is a substituted or unsubstituted hydrocarbon group having 1 to 20 carbon atoms, X is a hydroxy group or a hydrolyzable group, and c is 0 or 1; and
a polyoxyalkylene polymer (B) having a reactive silicon group represented by the formula (1), wherein
a monomer component of the (meth)acrylic ester copolymer (A) comprises:
a (meth)acrylic ester (al);
a polyoxyalkylene polymer (a2) having more than one (meth)acryloyl groups per molecule; and
a chain transfer agent (a3) having a mercapto group, and
the monomer component further comprises a monomer (a4) having a reactive silicon group and a polymerizable unsaturated group, and/or the chain transfer agent (a3) having a mercapto group further has a reactive silicon group.

2. The curable composition according to claim 1, wherein the polyoxyalkylene polymer (a2) constitutes 0.08 to 6.0 mol% of the monomer component.

3. The curable composition according to claim 1 or 2, wherein the chain transfer agent (a3) having a mercapto group constitutes 0.4 to 15 mol% of the monomer component.

4. The curable composition according to any one of claims 1 to 3, wherein the chain transfer agent (a3) having a mercapto group constitutes 2 to 9 wt% of the monomer component.

5. The curable composition according to any one of claims 1 to 4, wherein
the (meth)acrylic ester (a1) comprises an alkyl (meth)acrylate (a1') whose alkyl has 7 to 30 carbon atoms, and
the alkyl (meth)acrylate (a1') constitutes 2 to 9 wt% of the monomer component.

6. The curable composition according to any one of claims 1 to 5, wherein a molar ratio of the polyoxyalkylene polymer (a2) to the chain transfer agent (a3) having a mercapto group is 0.04 or more.

7. The curable composition according to any one of claims 1 to 6, wherein the polyoxyalkylene polymer (a2) has a number-average molecular weight of 20,000 or more.

8. The curable composition according to any one of claims 1 to 7, wherein the (meth)acrylic ester copolymer (A) has a weight-average molecular weight of 20,000 or less.

9. The curable composition according to any one of claims 1 to 8, wherein the (meth)acrylic ester copolymer (A) has a dispersity of 3.0 to 11.0.

10. The curable composition according to any one of claims 1 to 9, wherein the (meth)acrylic ester copolymer (A) has a sulfur atom concentration of 700 to 20,000 ppm.

11. The curable composition according to any one of claims 1 to 10, wherein a weight ratio of the (meth)acrylic ester copolymer (A) to the polyoxyalkylene polymer (B) is from 5:95 to 50:50.

12. The curable composition according to any one of claims 1 to 11, wherein the polyoxyalkylene polymer (B) is linear.

13. The curable composition according to any one of claims 1 to 12, wherein the polyoxyalkylene polymer (B) has a number-average molecular weight of 20,000 or more.

14. A cured product of the curable composition according to any one of claims 1 to 13.
